# EUROPEAN PATENT APPLICATION

(11) **EP 4 610 072 A1**
(43) Date of publication of application: **03.09.2025**
(21) Application number: 23870721.0
(22) Date of filing: 25.09.2023
(51) Int. Cl.: B60H 1/00

(54) **INTEGRATED MODULE FOR VEHICLE, AND THERMAL MANAGEMENT SYSTEM AND VEHICLE**

(30) Priority: 29.09.2022 CN 202211204400
(71) Applicant: BYD Company Limited, Shenzhen, Guangdong 518118 (CN)
(72) Inventor: XU, Min, Shenzhen, Guangdong 518118 (CN); ZHANG, Jianjun, Shenzhen, Guangdong 518118 (CN); YE, Meijiao, Shenzhen, Guangdong 518118 (CN); LI, Yuzhong, Shenzhen, Guangdong 518118 (CN); LAI, Juan, Shenzhen, Guangdong 518118 (CN)
(74) Representative: Mathys & Squire
(86) International application number: PCT/CN2023/121128
(87) International publication number: WO 2024/067490

(57) **Abstract**

An integrated module (5) for a vehicle, and a thermal management system (100) and a vehicle (200). The integrated module (5) comprises a first flow channel plate (5A) and a control valve group (53), wherein the first flow channel plate (5A) is provided with an air exhaust interface (51a), and a first cold plate interface (51d) to a fourth cold plate interface (51g); a first main line (A), a first branch line (B) and a second branch line (C) are arranged in the first flow channel plate (5A); and the control valve group (53) comprises a first on-off valve (533), a first electronic expansion valve (535) and a second electronic expansion valve (536), the first on-off valve (533) being connected to the first main line (A) to control connection/disconnection of the first main line (A), the first electronic expansion valve (535) being connected to the first branch line (B), and the second electronic expansion valve (536) being connected to the second branch line (C).

## Description

### CROSS-REFERENCE TO RELATED APPLICATIONS

The present disclosure claims priority to Chinese Patent Application No. 202211204400.5 filed on September 29, 2022, which is incorporated herein by reference in its entirety.

### FIELD

The present disclosure relates to the field of vehicle technologies, and in particular, to an integrated module for a vehicle, a thermal management system and a vehicle.

### BACKGROUND

In vehicles, such as new energy vehicles, multiple systems such as the heat pump system, air conditioning system, and thermal management system are typically installed to ensure the proper operation of the vehicle. However, due to their diverse functions, these systems have a large number of components and complicated connections.

### SUMMARY

The present disclosure is intended to resolve one of technical problems in the related art at least to some extent. Accordingly, the present disclosure provides an integrated module for a vehicle. The integrated module facilitates ensuring the cycle service life of the battery module. Meanwhile, it has a certain degree of integration, which is convenient for simplifying the installation.

The present disclosure further provides a thermal management system equipped with the aforementioned integrated module.

The present disclosure further provides a vehicle equipped with the aforementioned integrated module.

According to the integrated module for a vehicle in an example of the first aspect of the present disclosure, the vehicle includes a battery module, a first heat exchange plate and a second heat exchange plate. The first heat exchange plate and the second heat exchange plate exchange heat with the battery module respectively. The integrated module includes: a first flow channel plate, where the first flow channel plate is arranged with an air exhaust interface, and a first cold plate interface to a fourth cold plate interface. The air exhaust interface is used to connect to the outlet of a compressor outside the first flow channel plate, the first cold plate interface and the second cold plate interface are used to connect to the first heat exchange plate, and the third cold plate interface and the fourth cold plate interface are used to connect to the second heat exchange plate; a plurality of refrigerant flow channels are arranged inside the first flow channel plate, and the refrigerant flow channels include a first main line, a first branch line and a second branch line. The first main line is connected to the air exhaust interface, the first branch line is connected to the first cold plate interface, and the second branch line is connected to the third cold plate interface. The first main line is connected to the first branch line and the second branch line respectively; a control valve group, where the control valve group is arranged on the first flow channel plate, and the control valve group includes a first on-off valve, a first electronic expansion valve and a second electronic expansion valve. The first on-off valve is connected to the first main line to control its connection/disconnection, the first electronic expansion valve is connected to the first branch line, and the second electronic expansion valve is connected to the second branch line.

According to the integrated module for a vehicle in an example of the present disclosure, by setting from the first main line to the second branch line and the control valve group, when the integrated module is used in vehicles, the vehicle has a battery heating mode, so that at least one of the first heat exchange plate and the second heat exchange plate is used to heat and raise the temperature of the battery module, thereby ensuring that the battery module has a good cycle service life. In addition, by arranging the control valve group on the first flow channel plate, the integrated module can have a certain degree of integration, which facilitates the installation of the integrated module in the vehicle, saves the layout space inside the vehicle, simplifies the pipeline connections of the system, and facilitates the implementation of platform-based layout.

In some examples, the first flow channel plate is further arranged with an outdoor heat exchanger interface used to connect to an outdoor heat exchanger and a return gas interface connected to the inlet of the compressor; the plurality of refrigerant flow channels further include a second main line, and the second main line is connected to the return gas interface, and the second main line is connected to the first branch line and the second branch line respectively; the integrated module further includes a throttle valve group. The first flow channel plate is arranged with a throttle valve interface connected to the throttle valve group. The throttle valve group is connected to the second cold plate interface and the fourth cold plate interface respectively. The outdoor heat exchanger interface is connected to the throttle valve group.

In some examples, the control valve group further includes a second on-off valve. The second on-off valve is arranged on the first flow channel plate and is connected to the second main line to control its connection/disconnection.

In some examples, the first flow channel plate is arranged with a first interface of the heat exchanger. The control valve group includes a first check valve and a second check valve. The first check valve is arranged on the first flow channel plate and is connected to the throttle valve group and the first interface of the heat exchanger respectively. The first check valve guides the refrigerant in a single direction towards the first interface of the heat exchanger. The second check valve is arranged on the first flow channel plate, and the second check valve is connected to the throttle valve group and the outdoor heat exchanger interface respectively to guide the refrigerant in a single direction towards the throttle valve group.

In some examples, the throttle valve group includes a first throttling element and a second throttling element. The first throttling element is arranged on the first flow channel plate and communicates with the second cold plate interface. The second throttling element is arranged on the first flow channel plate and communicates with the fourth cold plate interface. The first throttling element and the second throttling element communicate with the outdoor heat exchanger interface respectively.

In some examples, the first flow channel plate is arranged with the first interface of the heat exchanger and the second interface of the heat exchanger. The integrated module further includes a first heat exchanger arranged on the first flow channel plate. The first interface of the heat exchanger and the second interface of the heat exchanger are connected to the first heat exchanger flow channel of the first heat exchanger. The first interface of the heat exchanger is connected to the throttle valve group. The second interface of the heat exchanger is connected to the return gas interface through the first internal flow channel inside the first flow channel plate.

In some examples, the first flow channel plate is further arranged with an in-vehicle condenser outlet interface. The integrated module further includes a third throttling element. The third throttling element is arranged on the first flow channel plate and communicates with the in-vehicle condenser outlet interface and the first interface of the heat exchanger respectively.

In some examples, the control valve group includes a third on-off valve. The third on-off valve is arranged on the first flow channel plate and is connected to the first internal flow channel to control its connection/disconnection.

In some examples, the first flow channel plate is further arranged with an evaporator inlet interface and an evaporator outlet interface. The evaporator inlet interface and the evaporator outlet interface are respectively connected to the two ends of an in-vehicle evaporator outside the first flow channel plate. An outlet flow channel connecting the evaporator outlet interface and the return air interface is arranged inside the first flow channel plate, and an inlet flow channel connecting the evaporator inlet interface and the outdoor heat exchanger interface is arranged inside the first flow channel plate. The integrated module further includes a fourth throttling element. The fourth throttling element is arranged on the first flow channel plate and is connected to the inlet flow channel.

In some examples, the first flow channel plate includes: a first plate body, on which a plurality of grooves are arranged; a second plate body, which is fixed to the first plate body to close the plurality of grooves. The plurality of grooves and the second plate body define external refrigerant flow channels for the circulation of refrigerant, and the external refrigerant flow channels include a portion of the plurality of refrigerant flow channels.

In some examples, an internal flow channel is arranged inside the first plate body, and the internal flow channels include a portion of the plurality of refrigerant flow channels.

In some examples, a plurality of external refrigerant flow channels are provided, and the cross-sectional shape of at least a portion of the external refrigerant flow channels is rectangular; and/or: a plurality of internal flow channels are provided, and the cross-sectional shape of at least a portion of the internal flow channels is rectangular.

In some examples, a plurality of valve seats are arranged on the side of the first plate body that is away from the second plate body, the valve seats protrude in the direction that is away from the second plate body, and each of the valve seats defines a valve cavity. The plurality of control valves of the control valve group are respectively arranged in the plurality of valve cavities in a one-to-one correspondence.

In some examples, the wall thickness of each valve cavity ranges from 3 mm to 4 mm.

In some examples, the center distance between two adjacent valve cavities is L, where L > R1 + R2 + a, where R1 is the inner diameter of one of the valve cavities, R2 is the inner diameter of the other valve cavity, and the value range of a is from 8 mm to 15 mm.

In some examples, installation positions are arranged on adjacent side walls of the first plate body, and the installation positions are suitable for being fixed to the body of the vehicle.

In some examples, the integrated module further includes a second flow channel plate. The second flow channel plate is arranged with a first water side interface and a second water side interface. The first water side interface is suitable for being connected to the motor electronic control module radiator outside the second flow channel plate, and the second water side interface is suitable for being connected to the first radiator outside the second flow channel plate. The integrated module further includes a first switching valve. The first switching valve is arranged on the second flow channel plate and communicates with a plurality of internal water channels inside the second flow channel plate. The first switching valve operates so that the coolant discharged from the first switching valve flows towards the first water side interface and/or the second water side interface.

In some examples, the second flow channel plate is further arranged with a third interface of the heat exchanger and a fourth interface of the heat exchanger. The third interface of the heat exchanger and the fourth interface of the heat exchanger are respectively connected to the second heat exchange flow channel outside the second flow channel plate. The first switching valve is respectively connected to the third interface of the heat exchanger and the fourth interface of the heat exchanger. The first switching valve operates so that the coolant flowing towards the first switching valve directly flows towards the first switching valve and/or flows towards the first switching valve through the second heat exchange flow channel.

In some examples, the second flow channel plate is arranged with a switching valve interface. The first switching valve is fixed to the second flow channel plate and is connected to the switching valve interface.

In some examples, the second flow channel plate is arranged with a water tank interface. The integrated module further includes a make-up water tank. The make-up water tank is arranged on the second flow channel plate and is connected to the water tank interface to supply water to the internal water channels.

In some examples, the second flow channel plate is further arranged with a water pump interface. The integrated module further includes a water pump. The water pump is arranged on the second flow channel plate and is connected to the water pump interface to drive the liquid in the internal water channels to flow.

In some examples, the first flow channel plate and the second flow channel plate are fixedly connected.

According to the thermal management system in an example of the second aspect of the present disclosure, it includes the integrated module according to the example of the first aspect of the present disclosure described above.

According to the vehicle in an example of the third aspect of the present disclosure, it includes: a body; a power supply module, which includes a battery module, a first heat exchange plate and a second heat exchanger plate. The first heat exchange plate and the second heat exchange plate are arranged on the battery module to exchange heat with the battery module. The power supply module is arranged on the body; and an integrated module. The integrated module is the one according to the example of the first aspect of the present disclosure described above. The first flow channel plate is fixed to the body. The first cold plate interface and the second cold plate interface are used to connect to the first heat exchange plate, and the third cold plate interface and the fourth cold plate interface are used to connect to the second heat exchange plate.

According to the vehicle in an example of the present disclosure, by adopting the aforementioned integrated module, it is convenient to implement platform-based layout.

The additional aspects and advantages of the present disclosure will be partly presented in the following description, and partly will become obvious from the following description, or can be understood through the practice of the present disclosure.

### BRIEF DESCRIPTION OF THE DRAWINGS

The aforementioned and/or additional aspects and advantages of the present disclosure will become apparent and easy to understand from the description of the examples in combination with the following FIG., wherein:
FIG. 1 is a principle diagram of the thermal management system according to an example of the present disclosure. The integrated module includes the components within the dashed box;
FIG. 2 is a working schematic diagram of the thermal management system as shown in FIG. 1, depicting the system in the battery heating mode;
FIG. 3 is a working schematic diagram of the thermal management system as shown in FIG. 1, depicting the system in the battery cooling mode;
FIG. 4 is a working schematic diagram of the thermal management system as shown in FIG. 1, depicting the system in the heating mode;
FIG. 5 is a working schematic diagram of the thermal management system as shown in FIG. 1, depicting the system in the battery heating + heating mode;
FIG. 6 is a working schematic diagram of the thermal management system as shown in FIG. 1, depicting the system in the battery cooling + heating mode;
FIG. 7 is a working schematic diagram of the thermal management system as shown in FIG. 1, depicting the system in the refrigeration mode;
FIG. 8 is a working schematic diagram of the thermal management system as shown in FIG. 1, depicting the system in the battery heating + refrigeration mode;
FIG. 9 is a working schematic diagram of the thermal management system as shown in FIG. 1, depicting the system in the battery cooling + refrigeration mode;
FIG. 10 is a working schematic diagram of the thermal management system as shown in FIG. 2, depicting the system in the refrigeration + warming mode;
FIG. 11 is a working schematic diagram of the thermal management system as shown in FIG. 2, depicting the system in the battery heating + refrigeration + warming mode;
FIG. 12 is a working schematic diagram of the thermal management system as shown in FIG. 2, depicting the system in the battery cooling + refrigeration + warming mode;
FIG. 13 is a schematic diagram of an integrated module according to an example of the present disclosure;

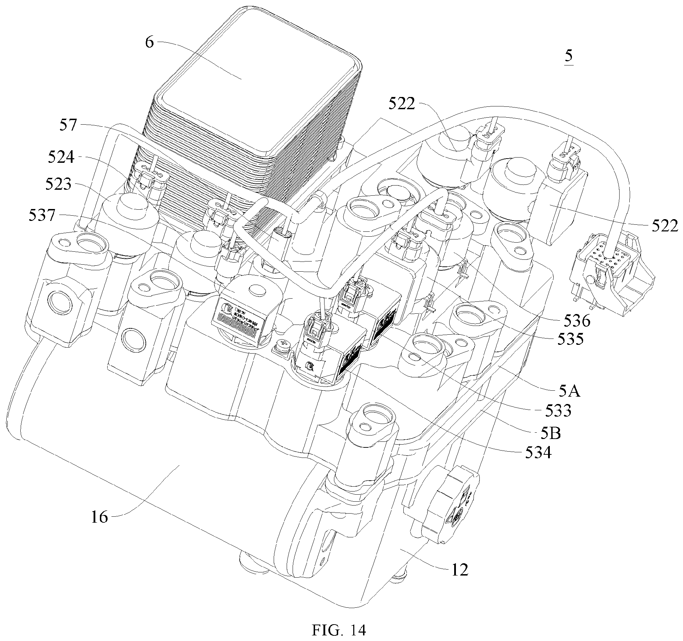

FIG. 14 is another schematic diagram of the integrated module as shown in FIG. 13;

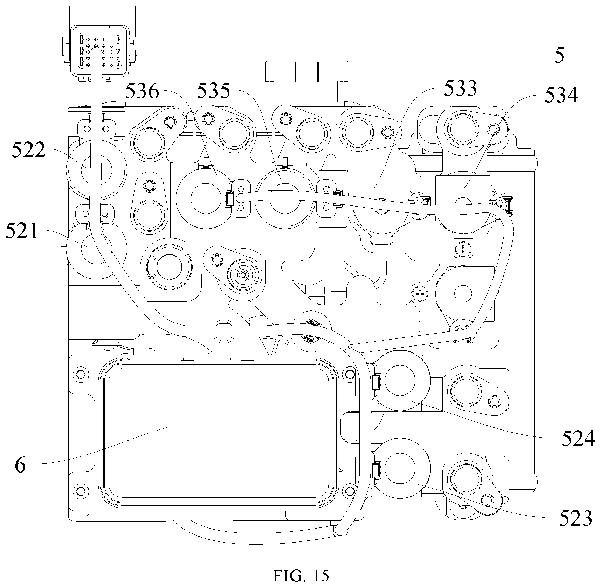

FIG. 15 is another schematic diagram of the integrated module as shown in FIG. 13;
FIG. 16 is an exploded view of the integrated module as shown in FIG. 13;
FIG. 17 is a schematic diagram of the first flow channel plate as shown in FIG. 16;
FIG. 18 to FIG. 22 are schematic diagrams of the first plate body as shown in FIG. 17;
FIG. 23 is a sectional view along the line A - A in FIG. 22;
FIG. 24 is a sectional view along the line B - B in FIG. 22;
FIG. 25 is a sectional view along the line C - C in FIG. 22;
FIG. 26 is a schematic diagram of the integrated module as shown in FIG. 13 corresponding to the coolant side;
FIG. 27 is a schematic diagram of the second flow channel plate as shown in FIG. 26;
FIG. 28 is another schematic diagram of the second flow channel plate as shown in FIG. 27;
FIG. 29 to FIG. 30 are schematic diagrams of the third plate body as shown in FIG. 26;
FIG. 31 to FIG. 32 are schematic diagrams of the fourth plate body as shown in FIG. 26;
FIG. 33 is a schematic diagram of the fixing piece of the integrated module as shown in FIG. 13;
FIG. 34 is a schematic diagram of an integrated module according to another example of the present disclosure;
FIG. 35 to FIG. 36 are another schematic diagrams of the integrated module as shown in FIG. 34;
FIG. 37 is a schematic diagram of a vehicle according to an example of the present disclosure.

### DETAILED DESCRIPTION

The examples of the present disclosure are described below in detail. Examples of the examples are shown in the accompanying drawings, and same or similar reference signs in all the accompanying drawings indicate same or similar components or components having same or similar functions. The examples described below with reference to the accompanying drawings are exemplary, are intended to explain the present disclosure and cannot be construed as a limitation on the present disclosure.

The following disclosure provides many different examples or examples for implementing different structures of the present disclosure. To simplify the disclosure of the present disclosure, the components and arrangements of specific examples are described below. Of course, they are merely examples and are not intended to limit the present disclosure. In addition, reference numerals and/or letters may be repeated in different examples of the present disclosure. This repetition is for the purpose of simplification and clarity, and it does not itself indicate any relationship between the various examples and/or configurations being discussed. Furthermore, the present disclosure provides examples of various specific processes and materials, but those of ordinary skill in the art can recognize the applicability of other processes and/or the use of other materials.

Below, with reference to the accompanying drawings, the integrated module 5 for the vehicle 200 according to an example of the present disclosure is described. The vehicle 200 can be a fuel vehicle, a gas-powered vehicle, a new energy vehicle, or a rail vehicle 200. The new energy vehicle can be a pure electric vehicle, a hybrid vehicle, an extended-range vehicle, etc. The vehicle 200 further includes a battery module 1021, which can be used for supplying power to the vehicle 200. For example, the battery module 1021 can serve as the operating power source of the vehicle 200, or the battery module 1021 can serve as the driving power source of the vehicle 200 to replace or partially replace fuel or natural gas, etc. to provide driving power for the vehicle 200, or the battery module 1021 can be used to supply power to certain components of the vehicle 200, such as motors, etc., enabling the battery module 1021 to meet the electrical power demands for at least one of the startup, navigation, and driving of the vehicle 200.

The vehicle 200 further includes a first heat exchange plate 3 and a second heat exchange plate 4. The first heat exchange plate 3 and the second heat exchange plate 4 exchange heat with the battery module 1021 respectively, that is, the first heat exchange plate 3 exchanges heat with the battery module 1021, and the second heat exchange plate 4 further exchanges heat with the battery module 1021, so that they can jointly regulate the temperature of the battery module 1021, ensuring the battery module 1021 has an appropriate working temperature and its stable and reliable operation.

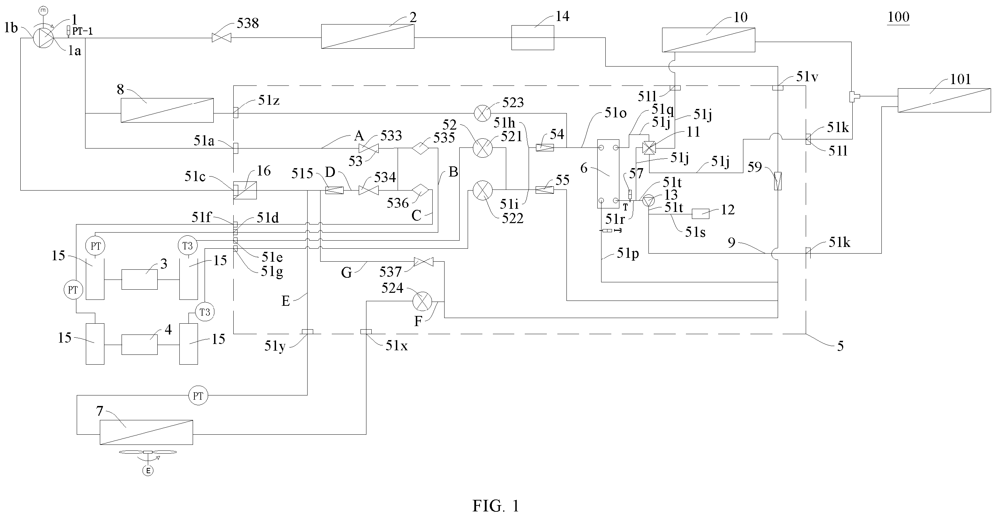

As shown in FIG. 1, FIG. 16 to FIG. 22, the integrated module 5 includes a first flow channel plate 5A. The first flow channel plate 5A is arranged with an air exhaust interface 51a, a first cold plate interface 51d, a second cold plate interface 51e, a third cold plate interface 51f, and a fourth cold plate interface 51g. A plurality of refrigerant flow channels are arranged inside the first flow channel plate 5A, and the plurality of refrigerant flow channels include a first main line A, a first branch line B, and a second branch line C. The first main line A is connected to the air exhaust interface 51a. The air exhaust interface 51a is used to connect to the outlet 1a of the compressor 1 outside the first flow channel plate 5A, so the first main line A is suitable for being communicated with the outlet 1a of the compressor 1. The refrigerant and the like discharged by the compressor 1 through the outlet 1a can flow into the first main line A through the air exhaust interface 51a. The first branch line B is connected to the first cold plate interface 51d. The first cold plate interface 51d and the second cold plate interface 51e are used to connect to the first heat exchange plate 3, so the first branch line B is suitable for being communicated with the flow channel of the first heat exchange plate 3. If the first cold plate interface 51d serves as the flow channel inlet, the medium in the first branch line B can flow into the flow channel of the first heat exchange plate 3. If the first cold plate interface 51d serves as the flow channel outlet, the medium in the flow channel of the first heat exchange plate 3 can flow into the first branch line B. The second branch line C is connected to the third cold plate interface 51f. The third cold plate interface 51f and the fourth cold plate interface 51g are used to connect to the second heat exchange plate 4, so the second branch line C is suitable for being communicated with the flow channel of the second heat exchange plate 4. If the third cold plate interface 51f serves as the flow channel inlet, the medium in the second branch line C can flow into the flow channel of the second heat exchange plate 4. If the third cold plate interface 51f serves as the flow channel outlet, the medium in the flow channel of the second heat exchange plate 4 can flow into the second branch line C. The first main line A is connected to the first branch line B and the second branch line C respectively, so the medium in the first main line A can be distributed to the first branch line B and the second branch line C.

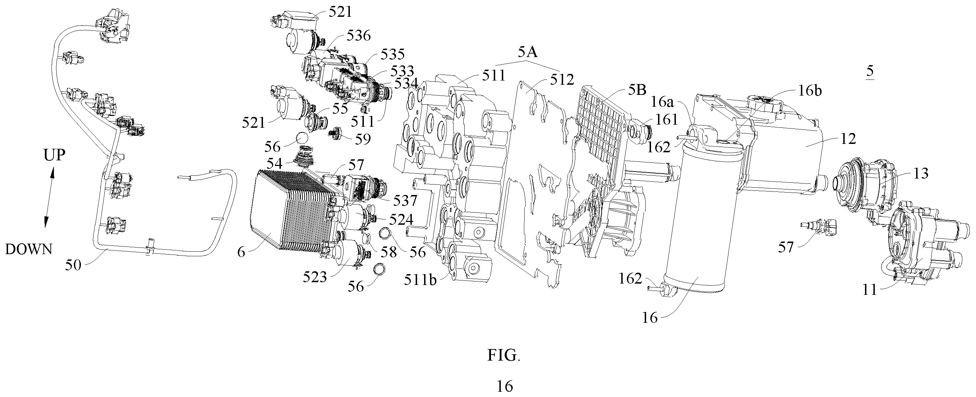

As shown in FIG. 1 and FIG. 16, the integrated module 5 further includes a control valve group 53. The control valve group 53 is arranged on the first flow channel plate 5A. The control valve group 53 includes a first on-off valve 533, a first electronic expansion valve 535, and a second electronic expansion valve 536. The first on-off valve 533 is connected to the first main line A to control its connection/disconnection, that is, the first on-off valve 533 can be used to control the connection and disconnection of the first main line A. The first electronic expansion valve 535 is connected to the first branch line B, and the second electronic expansion valve 536 is connected to the second branch line C, so the first electronic expansion valve 535 can be used to control the flow rate of the first branch line B, and the second electronic expansion valve 536 can be used to control the flow rate of the second branch line C.

It can be understood that the first flow channel plate 5A is arranged with an on-off valve interface 51b and expansion valve interfaces 51w. The on-off valve interface 51b is connected to the first on-off valve 533. Multiple expansion valve interfaces 51w are arranged. The first electronic expansion valve 535 is connected to the corresponding expansion valve interface 51w, and the second electronic expansion valve 536 is connected to the corresponding expansion valve interface 51w.

Therefore, when the integrated module 5 is used in the vehicle 200, the vehicle 200 can activate a battery heating mode that provides a battery heating function, which increases the temperature of the battery module 1021, enabling it to maintain an appropriate working temperature and ensuring the stable and reliable operation of the battery module 1021.

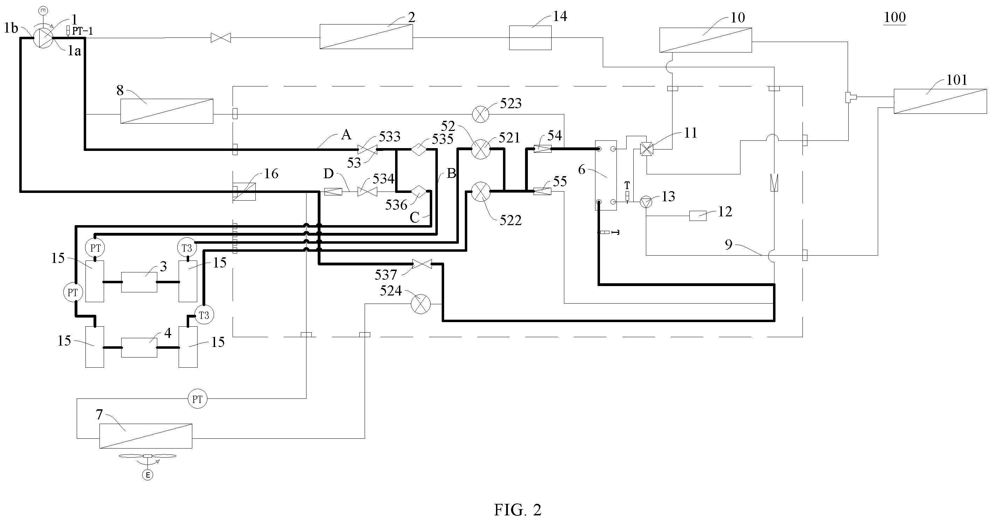

In the battery heating mode, as shown in FIG. 2, the first on-off valve 533, the first electronic expansion valve 535, and the second electronic expansion valve 536 are all opened. The refrigerant flows from the outlet 1a of the compressor 1 to the first main line A and is distributed to the first branch line B and the second branch line C. The refrigerant in the first branch line B flows to the first heat exchange plate 3 to heat the battery module 1021, and the refrigerant in the second branch line C flows to the second heat exchange plate 4 to heat the battery module 1021. Finally, the refrigerant flows back to the compressor 1 to realize circulation. It can be seen that at this time, both the first heat exchange plate 3 and the second heat exchange plate 4 are used for heating the battery module 1021.

Of course, in the battery heating mode, one of the first electronic expansion valve 535 and the second electronic expansion valve 536 is opened, and at this time, one of the first heat exchange plate 3 and the second heat exchange plate 4 is used for heating the battery module 1021.

It can be understood that in the battery heating mode, the first electronic expansion valve 535 and the second electronic expansion valve 536 are used to conduct the corresponding flow channels. Of course, the first electronic expansion valve 535 and the second electronic expansion valve 536 can further have a flow rate adjustment function.

For example, in the examples of FIG. 1 and FIG. 2, the integrated module 5 further includes a first heat exchanger 6. The first heat exchanger 6 is arranged on the first flow channel plate 5A, and the first heat exchanger 6 is connected between the throttle valve group 52 and the inlet 1b, so the refrigerant flowing from the throttle valve group 52 to the inlet 1b can flow through the first heat exchanger 6 for heat exchange. Therefore, in the battery heating mode, the refrigerant flowing out of at least one of the first heat exchange plate 3 and the second heat exchange plate 4 can flow to the throttle valve group 52 for throttling and pressure reduction. The throttled refrigerant can flow through the first heat exchanger 6 for heat exchange and then flow back to the compressor 1. At this time, the compressor 1, the first heat exchange plate 3, the second heat exchange plate 4, the throttle valve group 52, and the first heat exchanger 6 form a refrigerant circulation flow line, and the first heat exchanger 6 is used as an evaporator.

Of course, the first heat exchanger 6 can further not be arranged on the first flow channel plate 5A but outside the first flow channel plate 5A. In addition, in the battery heating mode, the heat exchange component that forms a refrigerant circulation flow line with the compressor 1, the first heat exchange plate 3, the second heat exchange plate 4, and the throttle valve group 52 can further be other heat exchange components, not limited to this first heat exchanger 6, as long as it is ensured that the above other heat exchange components can be used as an evaporator.

It should be noted that in the description of the present disclosure, "the first heat exchange plate 3" and "the second heat exchange plate 4" should be understood in a broad sense and can be understood to include the following multiple situations: 1. The first heat exchange plate 3 can be used to heat the battery module 1021, and the first heat exchange plate 3 can further be used to cool the battery module 1021. Similarly, the second heat exchange plate 4 can be used to heat the battery module 1021, and the second heat exchange plate 4 can further be used to cool the battery module 1021. 2. The first heat exchange plate 3 is only used to heat the battery module 1021, and the second heat exchange plate 4 is only used to heat the battery module 1021.

According to the integrated module 5 for a vehicle 200 in an example of the present disclosure, by setting the first main line A to the second branch line C and the control valve group 53, when the integrated module 5 is used in the vehicle 200 (for example, the thermal management system 100 of the vehicle 200), the vehicle 200 has a battery heating mode, so that at least one of the first heat exchange plate 3 and the second heat exchange plate 4 is used to heat the battery module 1021 and increase its temperature, thereby ensuring that the battery module 1021 is at an appropriate working temperature, ensuring the reliable use of the battery module 1021 and having a good cycle service life, and further improving the travel efficiency and usage convenience of the vehicle 200. In addition, by arranging the control valve group 53 on the first flow channel plate 5A, the integrated module 5 can have a certain degree of integration, facilitating the installation of the integrated module 5 in the vehicle 200, simplifying the assembly of various systems in the vehicle 200, and being conducive to saving the layout space inside the vehicle, simplifying the pipeline connections of the system, and facilitating the implementation of platform-based layout.

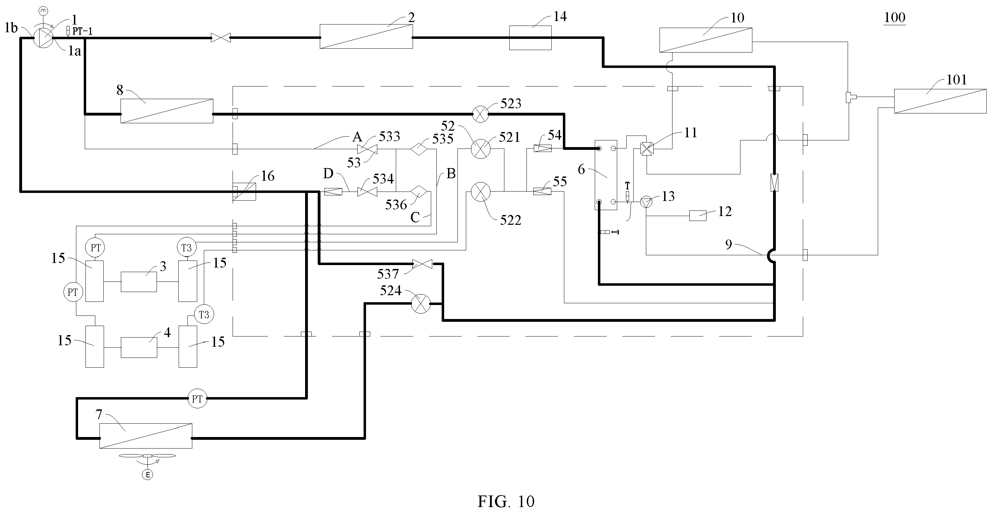

It should be noted that in FIG. 2 to FIG. 12 of the present disclosure, the flow lines composed of thick lines are the refrigerant circulation flow lines in the corresponding modes.

In some examples, as shown in FIG. 1, a first flow channel is defined inside the first heat exchange plate 3, and filtering elements 15 are respectively arranged at both ends of the length of the first flow channel. A second flow channel is defined inside the second heat exchange plate 4, and filtering elements 15 are further respectively arranged at both ends of the length of the second flow channel, so as to ensure the smooth flow of the first flow channel and the second flow channel.

In some examples, the control valve group 53 is installed on the first flow channel plate 5A in a direction perpendicular to the first flow channel plate 5A, which facilitates the quick installation of the control valves of the control valve group 53, ensures the accurate setting of the portion of the connection line 50 of the integrated module 5 that is connected to the control valve group 53, avoids wrong connections, and at the same time is convenient for saving the overall occupied space of the integrated module 5. For example, the control valve group 53 can be installed on the same side of the first flow channel plate 5A, further improving the installation convenience and installation efficiency of the control valve group 53 and facilitating the simplification of the processing of the first flow channel plate SA.

In some examples, as shown in FIG. 1, the throttle valve group 52 includes a first throttle valve, and there are two first throttle valves (for example, corresponding to the first throttling element 521 and the second throttling element 522 described below respectively). One of the first throttle valves corresponds to the first heat exchange plate 3, and this first throttle valve is connected in series with the first heat exchange plate 3. The other first throttle valve corresponds to the second heat exchange plate 4, and this first throttle valve is connected in series with the second heat exchange plate 4. Therefore, in the battery heating mode, if the first heat exchange plate 3 is used to heat the battery module 1021, the refrigerant in the first heat exchange plate 3 flows to one of the above first throttle valves for throttling and pressure reduction. If the second heat exchange plate 4 is used to heat the battery module 1021, the refrigerant in the second heat exchange plate 4 flows to the other first throttle valve for throttling and pressure reduction.

Of course, in other examples of the present disclosure, the first throttle valve can further be one. In the battery heating mode, the first heat exchange plate 3 and the second heat exchange plate 4 share one first throttle valve.

In some examples of the present disclosure, as shown in FIG. 1, FIG. 16, and FIG. 19, the first flow channel plate 5Ais further arranged with an outdoor heat exchanger interface 51v connected to the outdoor heat exchanger 2 and a return air interface 51c connected to the inlet 1b of the compressor 1. The outdoor heat exchanger interface 51v is connected to the throttle valve group 52. The plurality of refrigerant flow channels further include a second main line D. The second main line D is connected to the return air interface 51c, so the second main line D is suitable for being connected to the inlet 1b of the compressor 1. The refrigerant and the like in the second main line D can flow to the compressor 1 through the return air interface 51c. Moreover, the second main line D is connected to the first branch line B and the second branch line C respectively, so the refrigerant in the first branch line B and the second branch line C can converge into the second main line D.

As shown in FIG. 1, FIG. 16, and FIG. 19, the integrated module 5 further includes a throttle valve group 52. The first flow channel plate 5A is arranged with a throttle valve interface 51u connected to the throttle valve group 52. The throttle valve group 52 is connected to the second cold plate interface 51e and the fourth cold plate interface 51g respectively, and the throttle valve group 52 can throttle and reduce the pressure of the refrigerant flowing through it.

Therefore, in the battery heating mode, the refrigerant flowing out of at least one of the first heat exchange plate 3 and the second heat exchange plate 4 can flow to the throttle valve group 52 for throttling and pressure reduction, so as to realize the entire refrigerant circulation. Meanwhile, when the integrated module 5 is used in the vehicle 200, the vehicle 200 further has a battery cooling mode. In the battery cooling mode, as shown in FIG. 2, the high-temperature and high-pressure gaseous refrigerant completed in the compressor 1 flows to the outdoor heat exchanger 2 through the outlet 1a to exchange heat with the outdoor environment. The temperature of the refrigerant after heat exchange decreases and it is liquefied into a medium-temperature and high-pressure liquid, and then flows into the integrated module 5 through the outdoor heat exchanger interface 51v. The refrigerant flows through the throttle valve group 52 in the integrated module 5 for throttling and pressure reduction, further reducing the temperature of the refrigerant to make it form a low-temperature and low-pressure gas-liquid mixed state. The refrigerant after being throttled and depressurized flows out of the integrated module 5 and flows to at least one of the first heat exchange plate 3 and the second heat exchange plate 4 to cool the battery module 1021, so that the refrigerant absorbs the heat of the battery module 1021 and evaporates, reducing the temperature of the battery module 1021. Then, the refrigerant after heat exchange with the battery module 1021 flows to the integrated module 5 again and flows to the return air interface 51c through the second main line D and then flows back to the compressor 1 to enter the next cycle. At this time, the compressor 1, the outdoor heat exchanger 2, the throttle valve group 52, the first heat exchange plate 3, and the second heat exchange plate 4 form a refrigerant circulation flow line.

It can be understood that when the first heat exchange plate 3 and the second heat exchange plate 4 are used to jointly cool the battery module 1021 in the battery cooling mode, the cooling speed of the temperature of the battery module 1021 is accelerated, and the heat can be dissipated in time under high-power charging.

In an example, the throttle valve group 52 can be arranged on the first flow channel plate 5A to facilitate improving the degree of integration of the integrated module 5.

In some examples, as shown in FIG. 1, the thermal management system 100 of the vehicle 200 further includes a liquid storage tank 14. The liquid storage tank 14 is connected between the outdoor heat exchanger 2 and the outdoor heat exchanger interface 51v, so as to facilitate the thermal management system 100 to adaptively adjust according to the different refrigerant circulation amounts required in different modes (such as the battery cooling mode and the battery heating mode) to ensure the performance of the thermal management system 100.

In some examples, as shown in FIG. 1, the first flow channel plate 5A is further arranged with a separator interface. The integrated module 5 further includes a gas-liquid separator 16. The gas-liquid separator 16 has a refrigerant inlet 16a and a refrigerant outlet 16b. The gas-liquid separator 16 is fixed to the first flow channel plate 5A (for example, the gas-liquid separator 16 is fixed to the first flow channel plate 5A by screws 162), and the refrigerant inlet 16a is connected to the separator interface, and the refrigerant outlet 16b is connected to the inlet 1b of the compressor 1. Therefore, the layout of the gas-liquid separator 16 is facilitated, and the communication between the gas-liquid separator 16 and the flow channels inside the first flow channel plate 5A is realized, and at the same time, the degree of integration of the integrated module 5 is improved, which is conducive to saving the layout space inside the vehicle.

In an example, the gas-liquid separator 16 is arranged vertically, and the refrigerant outlet of the gas-liquid separator 16 is located at the top of the gas-liquid separator 16 to ensure better gas-liquid separation ability of the gas-liquid separator and ensure that the refrigerant entering the compressor 1 is gaseous. The gas-liquid separator 16 has a separator joint 161. The separator joint 161 is arranged at the refrigerant inlet 16a and communicates with the refrigerant inlet 16a. The refrigerant inlet 16a is assembled with the separator interface along the direction perpendicular to the first flow channel plate 5A through the separator joint 161. The separator joint 161 can be fixed (for example, welded) to the first flow channel plate SA.

It can be understood that the diameter and axial length of the gas-liquid separator 16 can be set according to actual needs to ensure that the volume of the gas-liquid separator 16 meets the usage requirements. For example, when the axial length of the gas-liquid separator 16 is small, the inner diameter of the gas-liquid separator 16 can be appropriately increased.

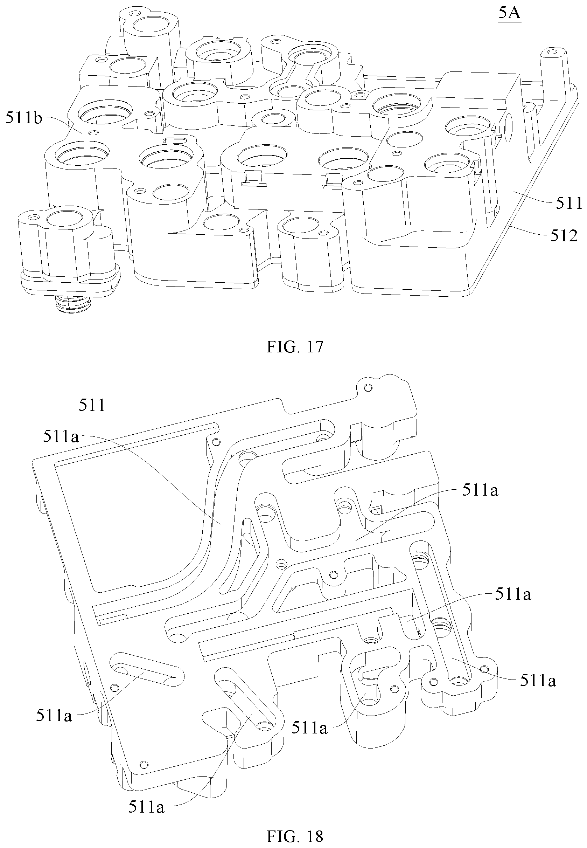

In some examples, as shown in FIG. 16 and FIG. 17, the throttle valve group 52 is installed on the first flow channel plate 5A in a direction perpendicular to the first flow channel plate 5A, which facilitates the quick installation of the control valves of the throttle valve group 52, ensures the accurate setting of the portion of the connection line 50 of the integrated module 5 that is connected to the throttle valve group 52, avoids wrong connections, and at the same time is convenient for saving the overall occupied space of the integrated module 5. For example, the throttle valve group 52 can be installed on the same side of the first flow channel plate 5A, further improving the installation convenience and installation efficiency of the throttle valve group 52.

Furthermore, the throttle valve group 52 and the control valve group 53 are installed on the same side in the thickness direction of the first flow channel plate 5A, further improving the assembly efficiency of the integrated module 5.

In some examples of the present disclosure, as shown in FIG. 1, the control valve group 53 further includes a second on-off valve 534. The second on-off valve 534 is arranged on the first flow channel plate 5A, and the second on-off valve 534 is connected to the second main line D to control its connection/disconnection, that is, the second on-off valve 534 can be used to control the connection and disconnection of the second main line D.

Therefore, in the battery heating mode, the first main line A is connected and the second main line D is disconnected, so that the refrigerant discharged from the outlet 1a flows to at least one of the first branch line B and the second branch line C through the first main line A to achieve the heating of the battery module 1021. It can be seen that in the above process, the refrigerant that has been throttled by the throttle valve group 52 and exchanged heat through other components (such as the first heat exchanger 6) can have two flow branches. One branch is connected to the return air interface 51c, and the other branch is connected to the return air interface 51c through the second main line D. Since the second main line D is disconnected, all the above refrigerant flows to the compressor 1 through the return air interface 51c.

In the battery cooling mode, the first main line A is disconnected and the second main line D is connected, so that the refrigerant discharged from the outlet 1a flows through the outdoor heat exchanger 2 and the throttle valve group 52 in sequence. The refrigerant after being throttled and depressurized flows out of the integrated module 5 and flows to at least one of the first heat exchange plate 3 and the second heat exchange plate 4 to cool the battery module 1021. Then, the refrigerant after heat exchange with the battery module 1021 flows to the second main line D to flow back to the compressor 1 through the return air interface 51c.

Obviously, the first on-off valve 533 and the second on-off valve 534 can be used to control the connection/disconnection of the first main line A and the second main line D, which is convenient for realizing the switching of the vehicle 200 to the battery cooling mode or the battery heating mode and facilitates the control of the vehicle 200.

Regardless of whether in the battery heating mode or the battery cooling mode, the amount of refrigerant flowing to the first heat exchange plate 3 and the second heat exchange plate 4 can be reasonably distributed through the first electronic expansion valve 535 and the second electronic expansion valve 536, so as to facilitate more flexible regulation of the temperature of the battery module 1021. For example, when the temperature of the battery module 1021 corresponding to the position of the first heat exchange plate 3 is different from the temperature of the battery module 1021 corresponding to the position of the second heat exchange plate 4, reasonably distributing the amount of refrigerant in the first heat exchange plate 3 and the second heat exchange plate 4 is convenient for effectively controlling the temperature of the corresponding position of the battery module 1021, thereby improving the flexibility of temperature control of the battery module 1021.

It can be understood that when the first electronic expansion valve 535 and the second electronic expansion valve 536 can be used for flow regulation but cannot realize the connection/disconnection of the corresponding flow channels, both the first branch line B and the second branch line C remain connected. Then, regardless of whether in the battery cooling mode or the battery heating mode, the first heat exchange plate 3 and the second heat exchange plate 4 are both used to adjust the temperature of the battery module 1021.

Of course, the first electronic expansion valve 535 can further have an on-off function to control the connection/disconnection of the first branch line B, and the second electronic expansion valve 536 can further have an on-off function to control the connection/disconnection of the second branch line C. At this time, if the first on-off valve 533 and the second on-off valve 534 cannot be closed normally (or the second on-off valve 534 is not set), etc., the first electronic expansion valve 535 and the second electronic expansion valve 536 can be used in cooperation to ensure the normal use of the system flow line, which is conducive to improving the use reliability of the control valve group 53 and can further provide a certain emergency treatment time for subsequent maintenance. Moreover, the first electronic expansion valve 535 and the second electronic expansion valve 536 can further be used to adjust which or which ones of the first heat exchange plate 3 and the second heat exchange plate 4 are used to adjust the temperature of the battery module 1021. For example, in the battery cooling mode, if the first branch line B is connected and the second branch line C is disconnected, the first heat exchange plate 3 is used to cool the battery module 1021, and the second heat exchange plate 4 cannot cool the battery module 1021. Or if the first branch line B is disconnected and the second branch line C is connected, the second heat exchange plate 4 is used to cool the battery module 1021, and the first heat exchange plate 3 cannot cool the battery module 1021. Or if both the first branch line B and the second branch line C are connected, both the first heat exchange plate 3 and the second heat exchange plate 4 are used to cool the battery module 1021.

In some examples of the present disclosure, as shown in FIG. 1, the first flow channel plate 5A is arranged with the first interface of the heat exchanger 51o. The first interface of the heat exchanger 51o is connected to a heat exchange component such as the first heat exchanger 6. The heat exchange component can be installed at the first interface of the heat exchanger 51o in a direction perpendicular to the first flow channel plate 5A. The control valve group 53 includes a first check valve 54 and a second check valve 55. The first check valve 54 is arranged on the first flow channel plate 5A, and the first check valve 54 is respectively connected to the throttle valve group 52 and the first interface of the heat exchanger 51o. The first check valve 54 guides the refrigerant to the first interface of the heat exchanger 51o in a single direction, that is, the first check valve 54 makes the refrigerant flow to the first heat exchanger 6 in a single direction. Then, the refrigerant in the throttle valve group 52 can flow to the first interface of the heat exchanger 51o through the first check valve 54, while the refrigerant in the first interface of the heat exchanger 51o cannot flow to the throttle valve group 52 through the first check valve 54. The control valve group 53 further includes a second check valve 55. The second check valve 55 is arranged on the first flow channel plate 5A, and the second check valve 55 is respectively connected to the throttle valve group 52 and the outdoor heat exchanger interface 51v to guide the refrigerant to the throttle valve group 52 in a single direction. Then, the refrigerant at the outdoor heat exchanger interface 51v can flow to the throttle valve group 52 through the second check valve 55, while the refrigerant in the throttle valve group 52 cannot flow to the outdoor heat exchanger interface 51v through the second check valve 55. Thus, it is convenient for the control valve group 53 to further control the flow line of the refrigerant in the integrated module 5 and further improves the degree of integration of the integrated module 5.

It can be understood that the first flow channel plate 5A is arranged with a first check valve interface 51h and a second check valve interface 51i. The first check valve 54 is connected to the first check valve interface 51h, and the second check valve 55 is connected to the second check valve interface 51i, realizing the corresponding communication between the flow channels of the first flow channel plate 5A and the first check valve 54 and the second check valve 55.

It can be seen that in the battery heating mode, the refrigerant in at least one of the first heat exchange plate 3 and the second heat exchange plate 4 flows through the throttle valve group 52 and then flows to the first interface of the heat exchanger 51o through the first check valve 54 to exchange heat in the above heat exchange component and then flows back to the compressor 1. In the battery cooling mode, the refrigerant flowing out of the outdoor heat exchanger 2 flows to the throttle valve group 52 through the second check valve 55, so that the refrigerant flows to at least one of the first heat exchange plate 3 and the second heat exchange plate 4 after being throttled and depressurized. Thus, by setting the first check valve 54 and the second check valve 55, the refrigerant in the integrated module 5 has an accurate flow line in the battery cooling mode and the battery heating mode, so as to ensure the temperature control effect on the battery module 1021.

For example, in the example of FIG. 1, the throttle valve group 52 includes a first throttle valve, and there are two first throttle valves. One of the first throttle valves corresponds to the first heat exchange plate 3, and the other first throttle valve corresponds to the second heat exchange plate 4. Then, in the battery cooling mode, the first heat exchange plate 3 and the second heat exchange plate 4 use different throttle valves respectively. Of course, in other examples of the present disclosure, in the battery cooling mode, the first heat exchange plate 3 and the second heat exchange plate 4 can further share one first throttle valve.

In some examples of the present disclosure, as shown in FIG. 1, the throttle valve group 52 includes a first throttling element 521 and a second throttling element 522. The first throttling element 521 is arranged on the first flow channel plate 5A, and the first throttling element 521 communicates with the second cold plate interface 51e. The second throttling element 522 is arranged on the first flow channel plate 5A, and the second throttling element 522 communicates with the fourth cold plate interface 51g. The first throttling element 521 and the second throttling element 522 communicate with the outdoor heat exchanger interface 51v respectively. Thus, in the battery cooling mode, the refrigerant in the first heat exchange plate 3 can flow to the outdoor heat exchanger interface 51v through the first throttling element 521, and/or the refrigerant in the second heat exchange plate 4 can flow to the outdoor heat exchanger interface 51v through the second throttling element 522, that is, the first heat exchange plate 3 and the second heat exchange plate 4 do not share the same throttling element, so as to ensure the temperature control effect on the battery module 1021 when the first heat exchange plate 3 and/or the second heat exchange plate 4 are used to adjust the temperature of the battery module 1021, and at the same time further improve the degree of integration of the integrated module 5, which is conducive to the design of the vehicle platform.

In some examples of the present disclosure, as shown in FIG. 1, the first flow channel plate 5Ais arranged with a first interface of the heat exchanger 51o and a second interface of the heat exchanger 51p. The integrated module 5 further includes a first heat exchanger 6 arranged on the first flow channel plate 5A. The first interface of the heat exchanger 51o and the second interface of the heat exchanger 51p are connected to the first heat exchange flow channel of the first heat exchanger 6. The first interface of the heat exchanger 51o is connected to the throttle valve group 52, and the second interface of the heat exchanger 51p is connected to the return air interface 51c through the first internal flow channel G inside the first flow channel plate 5A. Then, the refrigerant flowing out of the first heat exchanger 6 can flow back to the compressor 1 through the second interface of the heat exchanger 51p, the first internal flow channel G, and the return air interface 51c, and at the same time further improve the degree of integration of the integrated module 5, which is conducive to the design of the vehicle platform.

In an example, the first heat exchange flow channel can be correspondingly installed at the first interface of the heat exchanger 51o and the second interface of the heat exchanger 51p in a direction perpendicular to the first flow channel plate SA.

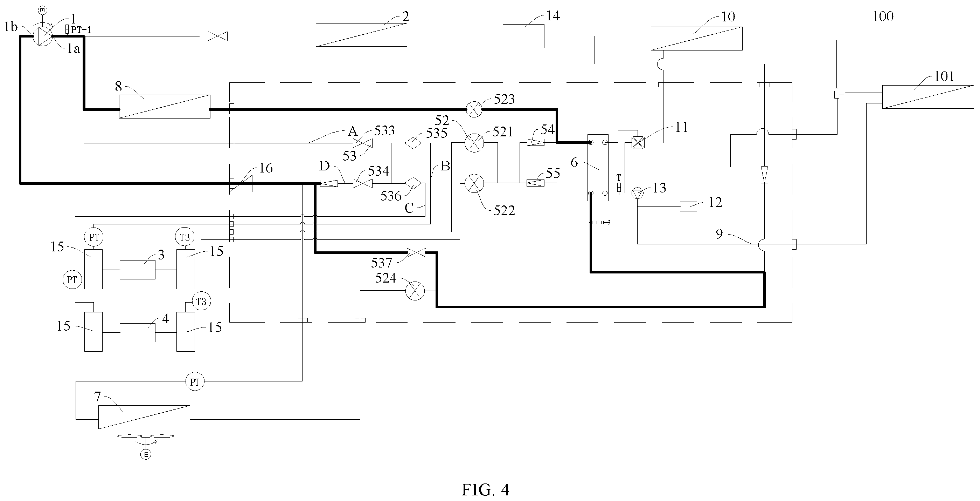

It can be seen that in the battery heating mode, the refrigerant in at least one of the first heat exchange plate 3 and the second heat exchange plate 4 flows through the throttle valve group 52 and then flows to the first heat exchanger 6 through the first interface of the heat exchanger 51o for exchanging heat. After heat exchange, the refrigerant flows through the second interface of the heat exchanger 51p to the first flow channel plate 5A again and flows to the return air interface 51c through the first internal flow channel G to flow back to the compressor 1. Moreover, when the integrated module 5 is used in the vehicle 200, the vehicle 200 can have a heating mode. In the heating mode, as shown in FIG. 4, the refrigerant discharged by the compressor 1 releases heat through the in-vehicle condenser 8 to increase the temperature of the in-vehicle environment and provide a comfortable environment for passengers and drivers. The refrigerant after heat release flows to the integrated module 5 through the in-vehicle condenser 8, and after being throttled and depressurized by the throttle valve group 52, it flows to the first interface of the heat exchanger 51o, absorbs heat through the first heat exchanger 6, and then flows back to the compressor 1 through the second interface of the heat exchanger 51p and the first internal flow channel G.

The first interface of the heat exchanger 51o corresponds to the inlet of the first heat exchange flow channel, and the second interface of the heat exchanger 51p corresponds to the outlet of the first heat exchange flow channel. The first interface of the heat exchanger 51o is located above the second interface of the heat exchanger 51p, that is, the refrigerant enters from the bottom and exits from the top, ensuring that the heat exchange efficiency of the first heat exchanger 6 reaches the maximum. Compared with the mode of entering from the top and exiting from the bottom, the heat exchange efficiency of the present disclosure increases by about 30% - 40%, so as to match the heat exchange efficiency of the heat dissipation of the motor electronic control module in the coolant circuit 9 and ensure the motor electronic control efficiency.

In some examples of the present disclosure, as shown in FIG. 1, the first flow channel plate 5A is further arranged with an in-vehicle condenser outlet interface 51z. Then, the in-vehicle condenser 8 of the vehicle 200 is connected between the outlet 1a of the compressor 1 and the in-vehicle condenser outlet interface 51z, so that the refrigerant at the outlet 1a can flow to the in-vehicle condenser outlet interface 51z through the in-vehicle condenser 8. The integrated module 5 further includes a third throttling element 523. The third throttling element 523 is arranged on the first flow channel plate 5A, and the third throttling element 523 communicates with the in-vehicle condenser outlet interface 51z and the first interface of the heat exchanger 51o respectively.

Therefore, in the heating mode, the refrigerant discharged by the compressor 1 releases heat through the in-vehicle condenser 8. The refrigerant after heat release flows to the integrated module 5 through the in-vehicle condenser 8, and after being throttled and depressurized by the third throttling element 523, it flows to the first interface of the heat exchanger 51o, absorbs heat through the first heat exchanger 6, and then flows back to the compressor 1 through the second interface of the heat exchanger 51p and the first internal flow channel G.

For example, in the example of FIG. 1, the throttle valve group 52 includes a first throttling element 521, a second throttling element 522, and a third throttling element 523. The first throttling element 521 is set corresponding to the first heat exchange plate 3, the second throttling element 522 is set corresponding to the second heat exchange plate 4, and the third throttling element 523 is set corresponding to the in-vehicle condenser 8. Of course, in other examples of the present disclosure, at least two of the first heat exchange plate 3, the second heat exchange plate 4, and the in-vehicle condenser 8 can further share the same throttling element.

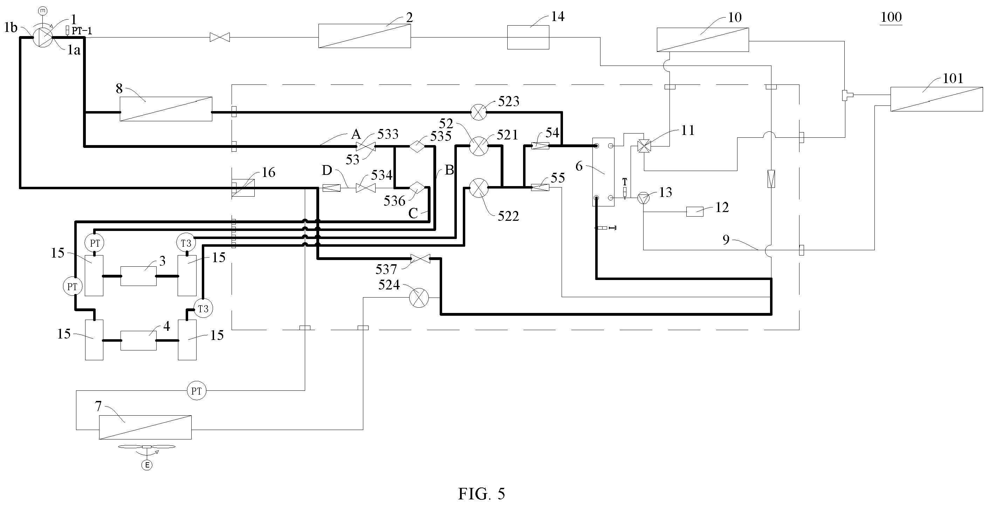

It can be understood that when the integrated module 5 is used in the vehicle 200, the vehicle 200 can be constructed as follows: the vehicle 200 has a battery heating mode and a heating mode, and the battery heating mode and the heating mode cannot be carried out simultaneously; or the vehicle 200 has a battery heating mode, a heating mode, and a battery heating + heating mode. In the battery heating + heating mode (as shown in FIG. 5), a portion of the refrigerant discharged from the compressor 1 flows to at least one of the first heat exchange plate 3 and the second heat exchange plate 4 through the first main line A and then to the throttle valve group 52, while another portion of the refrigerant discharged from the compressor 1 flows through the in-vehicle condenser 8 and then to the third throttling element 523. The refrigerant flowing through the throttle valve group 52 and the refrigerant flowing through the third throttling element 523 can converge to the first interface of the heat exchanger 51o, flow through the first heat exchanger 6, and then flow back to the integrated module 5 to be discharged to the compressor 1 through the first internal flow channel G.

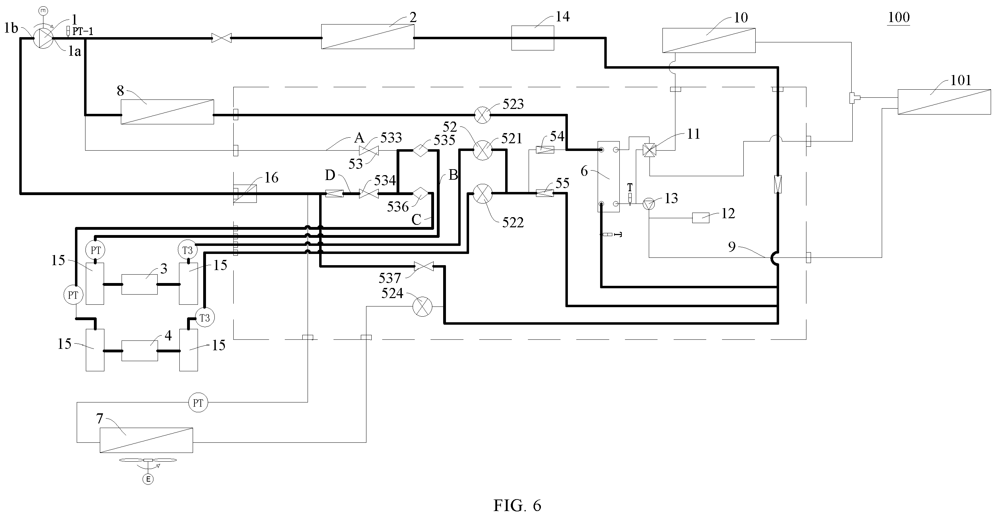

Certainly, when the integrated module 5 is used in the vehicle 200, the vehicle 200 can be constructed as follows: the vehicle 200 has a battery cooling mode and a heating mode, and the battery cooling mode and the heating mode cannot be carried out simultaneously; or, the vehicle 200 has a battery cooling mode, a heating mode, and a battery cooling + heating mode. In the battery cooling + heating mode (as shown in FIG. 6), a portion of the refrigerant discharged from the compressor 1 flows through the outdoor heat exchanger 2 to the integrated module 5, and after being throttled and depressurized by the throttle valve group 52, flows to at least one of the first heat exchange plate 3 and the second heat exchange plate 4, and then flows back to the integrated module 5 again to be discharged to the compressor 1 through the second main line D. Another portion of the refrigerant discharged from the compressor 1 passes through the in-vehicle condenser 8 and, after flowing through the third throttling element 523 for throttling and depressurization, flows to at least one of the first heat exchange plate 3 and the second heat exchange plate 4, and then flows back to the integrated module 5 again to be discharged to the compressor 1 through the second main line D.

In some examples of the present disclosure, as shown in FIG. 1, the control valve group 53 further includes a third on-off valve 537. The third on-off valve 537 is arranged on the first flow channel plate 5A, and the third on-off valve 537 is connected to the first internal flow channel G to control its connection/disconnection, so as to facilitate the switching of the vehicle 200 between multiple modes (for example, between the battery cooling + heating mode and the battery cooling mode, between the battery heating + heating mode and the battery heating mode), and at the same time further improve the degree of integration of the integrated module 5.

In some examples of the present disclosure, as shown in FIG. 1, the first flow channel plate 5A is further arranged with an evaporator inlet interface 51x and an evaporator outlet interface 51y. The evaporator inlet interface 51x and the evaporator outlet interface 51y are respectively connected to the two ends of the in-vehicle evaporator 7 located outside the first flow channel plate 5A. An outlet flow channel E connecting the evaporator outlet interface 51y and the return air interface 51c is arranged inside the first flow channel plate 5A, and an inlet flow channel F connecting the evaporator inlet interface 51x and the outdoor heat exchanger interface 51v is arranged inside the first flow channel plate 5A. The integrated module 5 further includes a fourth throttling element 524. The fourth throttling element 524 is arranged on the first flow channel plate 5A, and the fourth throttling element 524 is connected to the inlet flow channel F. The fourth throttling element 524 can be used to throttle and reduce the pressure of the refrigerant flowing through the fourth throttling element 524 on the inlet flow channel F.

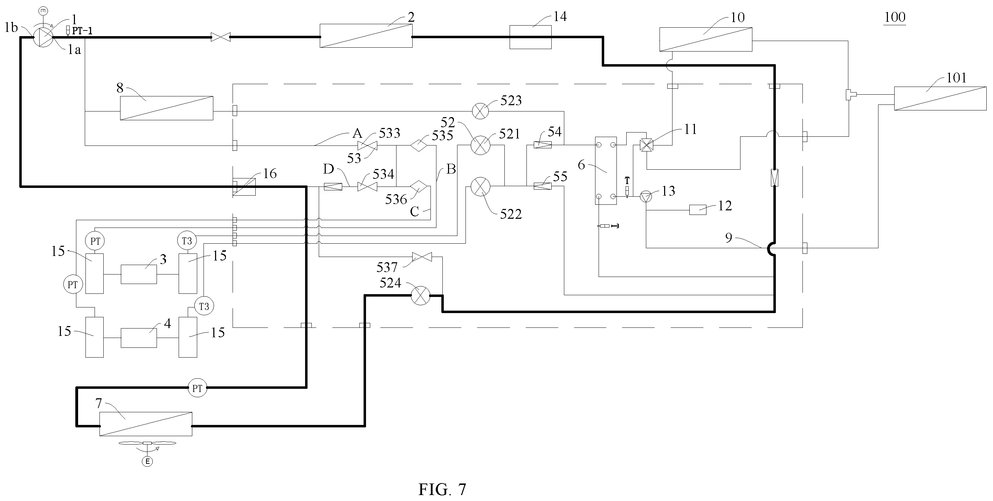

Therefore, when the integrated module 5 is used in the vehicle 200, the vehicle 200 can have a refrigeration mode. In the refrigeration mode, as shown in FIG. 7, the refrigerant discharged from the compressor 1 flows through the outdoor heat exchanger 2 and then flows to the integrated module 5 through the outdoor heat exchanger interface 51v, and then flows through the inlet flow channel F. After being throttled and depressurized by the fourth throttling element 524, it flows out through the evaporator inlet interface 51x and flows to the in-vehicle evaporator 7 to absorb the internal heat of the vehicle 200, so as to reduce the temperature inside the vehicle and provide a comfortable environment for passengers and drivers. The refrigerant after absorbing heat flows back to the integrated module 5 through the evaporator outlet interface 51y and then flows to the return air interface 51c through the outlet flow channel E to be discharged to the compressor 1.

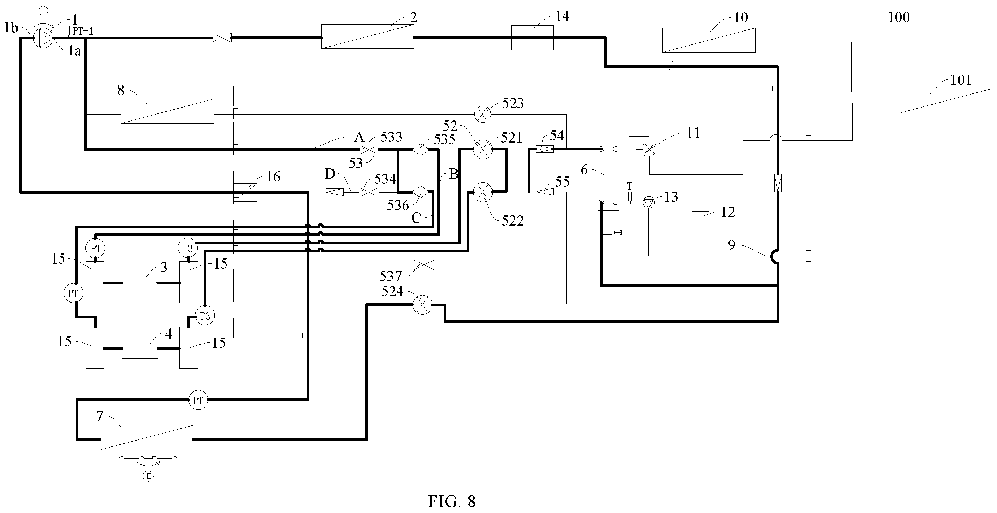

It can be understood that when the integrated module 5 is used in the vehicle 200, the vehicle 200 can be constructed as follows: the vehicle 200 has a battery heating mode and a refrigeration mode, and the battery heating mode and the refrigeration mode cannot be carried out simultaneously; or, the vehicle 200 has a battery heating mode, a refrigeration mode, and a battery heating + refrigeration mode. In the battery heating + refrigeration mode (as shown in FIG. 8), a portion of the refrigerant discharged from the compressor 1 flows to the integrated module 5 and, after flowing through the first main line A to at least one of the first heat exchange plate 3 and the second heat exchange plate 4, then flows to the throttle valve group 52 and the first heat exchanger 6, and can flow back to the integrated module 5 and then be discharged to the inlet 1b (for example, the refrigerant flowing out from the first heat exchanger 6 passes through). Another portion of the refrigerant discharged from the compressor 1 flows through the outdoor heat exchanger 2, flows to the in-vehicle evaporator 7 through the fourth throttling element 524, and then flows back to the integrated module 5 to be discharged to the inlet.

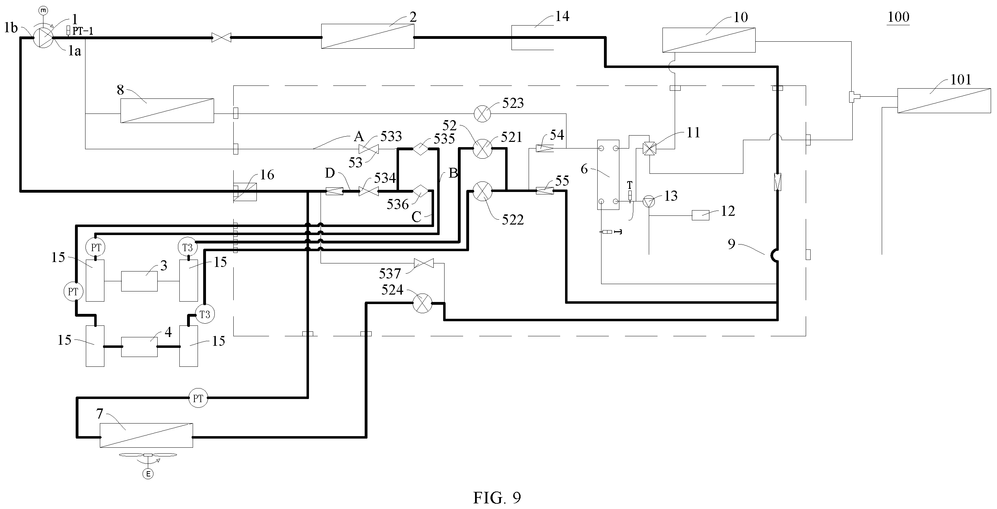

In addition, when the integrated module 5 is used in the vehicle 200, the vehicle 200 can be constructed as follows: the vehicle 200 has a battery cooling mode and a refrigeration mode, and the battery cooling mode and the refrigeration mode cannot be carried out simultaneously; or, the thermal management system 100 has a battery cooling mode, a refrigeration mode, and a battery cooling + refrigeration mode. In the battery cooling + refrigeration mode (as shown in FIG. 9), the refrigerant discharged from the compressor 1 flows to the integrated module 5 through the outdoor heat exchanger 2 and is divided into two lines. One line flows through the throttle valve group 52 in the integrated module 5 to be throttled and depressurized, and then flows to at least one of the first heat exchange plate 3 and the second heat exchange plate 4, and then is discharged to the inlet 1b through the second main line D. The other line flows through the inlet flow channel F to the in-vehicle evaporator 7 to absorb heat, and then flows back to the integrated module 5 to be discharged to the inlet 1b through the outlet flow channel E.

In some examples of the present disclosure, as shown in FIG. 16 to FIG. 21, the first flow channel plate 5A includes a first plate body 511 and a second plate body 512. The first plate body 511 is arranged with a plurality of grooves 511a. The side of the grooves 511a facing the second plate body 512 is open. The second plate body 512 is fixed to the first plate body 511 to close the plurality of grooves 511a. The plurality of grooves 511a and the second plate body 512 define external refrigerant flow channels for the circulation of refrigerant, that is, the first plate body 511 and the second plate body 512 jointly define external refrigerant channels. The external refrigerant flow channels include a portion of the plurality of refrigerant flow channels, that is, a portion of the plurality of refrigerant flow channels can be jointly defined by the first plate body 511 and the second plate body 512. Therefore, the external refrigerant flow channels are convenient to process, and it is convenient to realize the rational layout of a plurality of external refrigerant flow channels by arranging the relative positions of a plurality of grooves 511a. For example, it is convenient to arrange the external refrigerant flow channels into multiple temperature zones according to the refrigerant temperature in the external refrigerant flow channels. The corresponding portions of the external refrigerant flow channels can be located in the corresponding temperature zones to reduce the heat transfer from the high-temperature zone to the low-temperature zone.

It can be understood that when a portion of the first main line A, the first branch line B, and the second branch line C is external refrigerant flow channels, the position of the above-mentioned portion of the first main line A, the first branch line B, and the second branch line C in the corresponding sub-flow channels can be specifically set according to actual needs.

In an example, the first plate body 511 and the second plate body 512 are welded together to ensure that the first flow channel plate 5A has excellent airtightness and burst resistance.

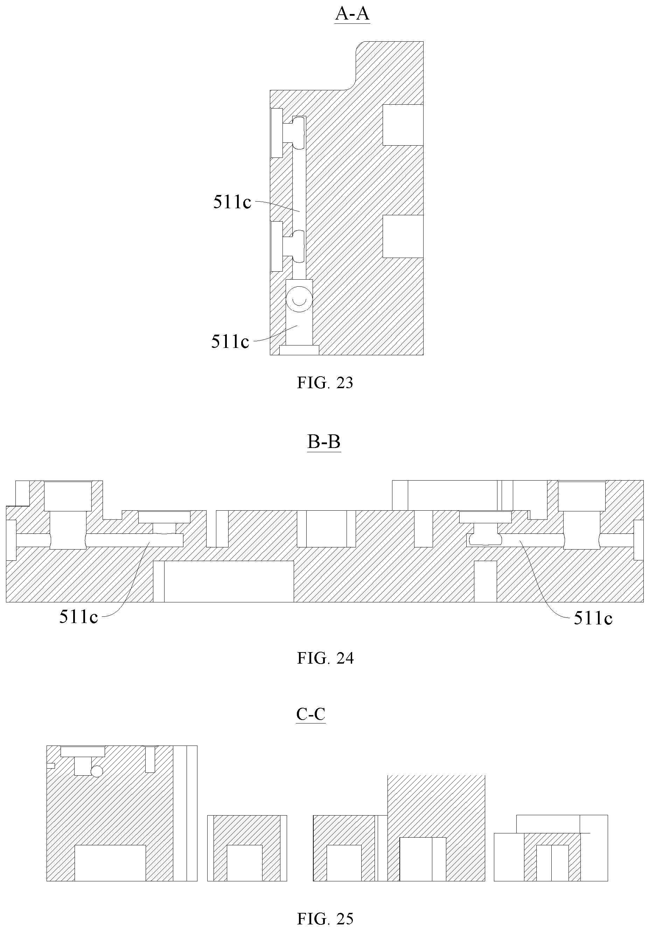

In some examples of the present disclosure, as shown in FIG. 23 and FIG. 24, the interior of the first plate body 511 is arranged with internal flow channels 511c. The internal flow channels 511c can be defined only by the first plate body 511. The internal flow channels 511c include a portion of the plurality of refrigerant flow channels, that is, a portion of the first main line A, the first branch line B, and the second branch line C are jointly defined by the first plate body 511 and the second plate body 512, and another portion of the first main line A, the first branch line B, and the second branch line C is defined only by the first plate body 511, so as to facilitate the rational utilization of the first plate body 511. On the one hand, a portion of the internal flow channels 511c and a portion of the external refrigerant flow channels can be stacked in the thickness direction of the first plate body, which is conducive to reducing the area of the entire first flow channel plate 5A, thereby realizing the compact layout of the integrated module. On the other hand, when two components integrated on the first flow channel plate 5A are close to each other, they can be directly connected through the internal flow channels 511c. At this time, the internal flow channels 511c can be simple straight flow channels with small flow resistance, and the cross-sectional area of the internal flow channels 511c can be adaptively reduced, thereby reducing the thickness of the first flow channel plate 5A, further realizing the compact layout of the integrated module, and facilitating the saving of the occupied space of the first flow channel plate SA.

It can be understood that the positions of the portions of the first main line A to the second branch line C that are internal flow channels 511c in the corresponding sub-flow channels can be specifically set according to actual needs.

In some examples, as shown in FIG. 23 and FIG. 24, there are a plurality of external refrigerant flow channels, and the cross-sections of at least a portion of the external refrigerant flow channels are formed in a rectangular shape; and/or: there are a plurality of internal flow channels 511c, and the cross-sections of at least a portion of the internal flow channels 511c are formed in a rectangular shape, so as to increase the flow areas of the above at least a portion of the external refrigerant flow channels and at least a portion of the internal flow channels, so as to match the requirements of valves and system flow resistance required under high-power charging. Under the condition of the same area, the flow of refrigerant in the rectangular internal flow channels 511c is larger and the flow resistance is smaller, which is convenient to meet the high-power charging requirements of the vehicle 200, and at the same time is convenient to ensure the amount of refrigerant in the internal flow channels and ensure the amount of refrigerant participating in the cycle, thereby ensuring the temperature control effect of at least one of the first heat exchange plate 3 and the second heat exchange plate 4 on the battery module 1021. Especially when both the first heat exchange plate 3 and the second heat exchange plate 4 are used to adjust the temperature of the battery module 1021, the internal flow channels can further ensure the temperature control effect on the battery module 1021.

In an example, both the first electronic expansion valve 535 and the second electronic expansion valve 536 are large-diameter valve bodies (the diameter of the large-diameter valve body is 16 mm). The cross-sections of the internal flow channels 511c corresponding to the first electronic expansion valve 535 and the internal flow channels 511c corresponding to the second electronic expansion valve 536 are both rectangular. For example, the upper one of the two internal flow channels 511c in FIG. 23 and the two internal flow channels 511c shown in FIG. 24 correspond to small-diameter valve bodies, and the design values of the above flow channels are greater than φ3.34 mm to φ6 mm. The cross-sections of the remaining internal flow channels 511c are rectangular, and the cross-sectional area is greater than 16 mm × 18 mm.

In some examples, as shown in FIG. 16, FIG. 17, FIG. 20, and FIG. 21, the side of the first plate body 511 that is away from the second plate body 512 is arranged with a plurality of valve seats 511b. The valve seats 511b protrude in the direction that is away from the second plate body 512. Each valve seat 511b defines a valve cavity. A plurality of control valves of the control valve group 53 (such as the first on-off valve 522, the first electronic expansion valve 535, the second electronic expansion valve 536, etc.) are respectively arranged in the plurality of valve cavities in a one-to-one correspondence, so as to realize the installation of the control valve group 53. At the same time, on the premise of ensuring the structural strength, it is conducive to reducing the mass of the first plate body 511 and achieving the lightweight standard for the entire vehicle.

In an example, a water-cutting process is carried out between the flow channels on the first flow channel plate 5A, applying the principle of air insulation to separate the refrigerant flow in the system and better realize the functional modes of the air conditioner.

In an example, the control valves are detachably installed on the corresponding valve seats 511b. For example, the outer surface of the control valve is formed with external threads, and the peripheral wall of the valve cavity is formed with internal threads. The external threads and the internal threads are in threaded fit, so that the control valve is threadedly connected to the corresponding valve seat 511b. Of course, the temperature sensors in the refrigerant flow line are further installed on the corresponding valve seats 511b and are threadedly connected to the corresponding valve seats 511b.

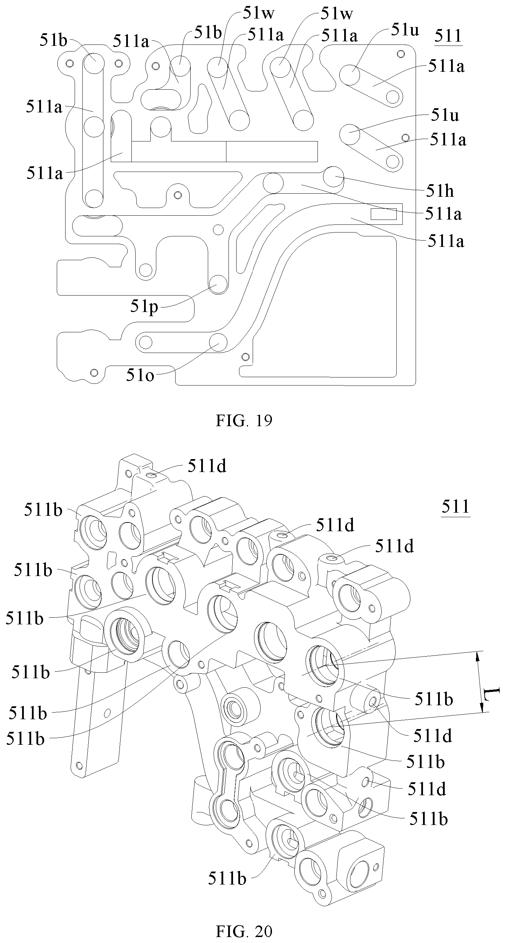

In an example, in the example of FIG. 20, the central axis of the valve cavity is perpendicular to the first plate body 511, so that the insertion direction of the control valve installed in the corresponding valve cavity is perpendicular to the first plate body 511, which is convenient for the quick installation of the control valve. At the same time, a plurality of control valves of the control valve group 53 are installed on the same side in the thickness direction of the first plate body 511, further improving the installation convenience and installation efficiency of the control valve group 53. Of course, the throttle valve group 52 and temperature sensors, etc. can further be installed in a direction perpendicular to the first plate body 511.

It can be understood that when the integrated module 5 includes the throttle valve group 52, the plurality of valve bodies of the throttle valve group 52 are respectively arranged in the plurality of valve cavities in a one-to-one correspondence, so as to realize the installation of the throttle valve group 52.

In addition, the interfaces on the integrated module 5 can include the first type of interface and the second type of interface. The first type of interface can be used to install the corresponding valve body, that is, the first type of interface is the valve cavity, and the second type of interface communicates with the corresponding valve body through the flow channels on the integrated module 5.

In some examples, the wall thickness of each valve cavity ranges from 3 mm to 4 mm, so as to ensure that the valve seat has reliable structural strength and stability and ensure the stable installation of the control valve. For example, the wall thickness of the valve cavity is 3 mm, or 3.2 mm, or 3.5 mm, or 3.7 mm, or 4 mm, etc.

It can be understood that the wall thicknesses of a plurality of valve cavities can be equal or unequal.

In some examples, as shown in FIG. 20, the center distance between two adjacent valve cavities is L, where L > R1 + R2 + a, where R1 is the inner diameter of one of the valve cavities, R2 is the inner diameter of the other valve cavity, and the value range of a is from 8 mm to 15 mm. Thus, it is convenient to provide sufficient installation space for two adjacent control valves, so as to adapt to relatively complex control valve structures, ensure the smooth installation of each control valve, and avoid interference between two adjacent control valves. For example, a can be 8 mm, or 11 mm, or 13 mm, or 15 mm, etc.

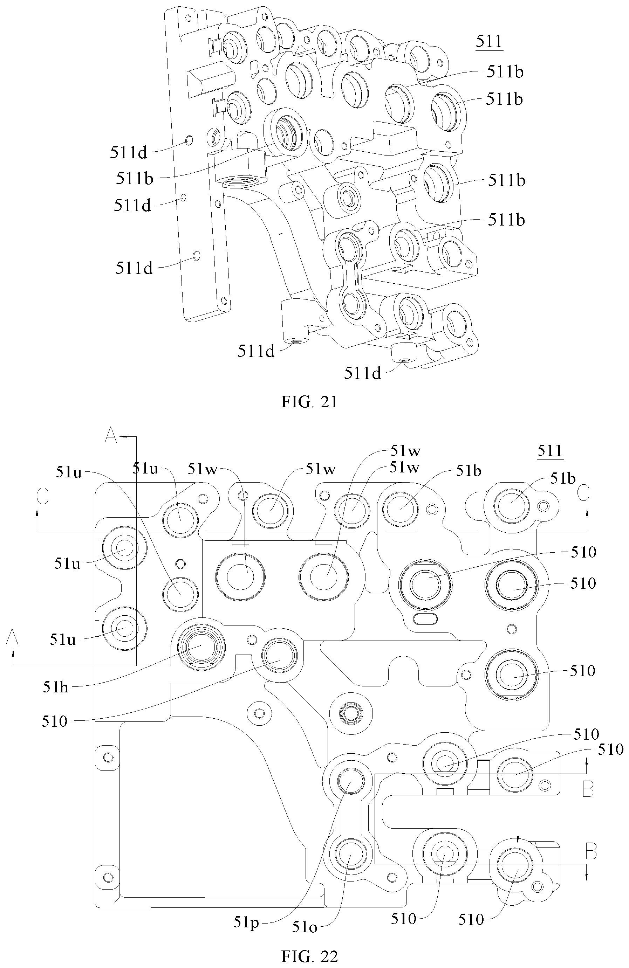

In some examples, as shown in FIG. 20 and FIG. 21, installation positions 511d are arranged on the adjacent side walls of the first plate body 511. The installation positions 511d are suitable for being fixed to the body 103 of the vehicle 200, so as to realize the reliable installation of the integrated module 5. Meanwhile, it is convenient to make the integrated module 5 applicable to different vehicle models to meet the different installation requirements of different vehicle models for the integrated module 5.

For example, in the examples of FIG. 20 and FIG. 21, the first plate body 511 has multiple side walls. The multiple side walls include a first side wall that is relatively arranged in the up-down direction and a second side wall that is relatively arranged in the left-right direction. Each first side wall is adjacent to each second side wall respectively. At least one first side wall and at least one second side wall are respectively arranged with installation positions 511d. When the fixed points or fixed surfaces left for the integrated module 5 in the whole vehicle are at the upper end or the lower end, the installation positions 511d on the first side wall can be used to connect with the body 103. When the fixed points or fixed surfaces left for the integrated module 5 in the whole vehicle are at the left end or the right end, the installation positions 511d on the second side wall can be used to connect with the body 103 of the whole vehicle.

In an example, the installation position 511d is formed as an installation hole. Of course, the installation position 511d can further be formed as other installation structures. When there are multiple installation positions 511d, the structures of the multiple installation positions 511d can be the same or different.

In some examples of the present disclosure, as shown in FIG. 16, FIG. 27, and FIG. 28, the integrated module 5 further includes a second flow channel plate 5B. The second flow channel plate 5B is arranged with a first water side interface 51k and a second water side interface 51l. The first water side interface 51k is suitable for being connected to the motor electronic control module radiator 101 located outside the second flow channel plate 5B, and the second water side interface 51l is suitable for being connected to the first radiator 10 located outside the second flow channel plate 5B. Then, the coolant in the second flow channel plate 5B can flow to the motor electronic control module radiator 101 through the first water side interface 51k, or the coolant in the motor electronic control module radiator 101 can flow to the second flow channel plate 5B through the first water side interface 51k. The coolant in the second flow channel plate 5B can flow to the first radiator 10 through the second water side interface 51l, or the coolant in the first radiator 10 can flow to the second flow channel plate 5B through the second water side interface 51l.

The integrated module 5 further includes a first switching valve 11. The first switching valve 11 is arranged on the second flow channel plate 5B, and the first switching valve 11 communicates with a plurality of internal water channels in the second flow channel plate 5B. The first switching valve 11 operates to make the coolant discharged from the first switching valve 11 flow to the first water side interface 51k and/or the second water side interface 511. Thus, it is convenient to control the flow line of the coolant by controlling the first switching valve 11, so as to realize the control of the coolant of the motor electronic control module radiator 101, and at the same time further improve the degree of integration of the integrated module 5.

For example, when the first switching valve 11 operates to make the coolant discharged from the first switching valve 11 flow to the first water side interface 51k, the motor electronic control module radiator 101 participates in the coolant circulation. When the first switching valve 11 operates to make the coolant discharged from the first switching valve 11 flow to the second water side interface 511, the first radiator 10 participates in the coolant circulation. When the first switching valve 11 operates to make the coolant discharged from the first switching valve 11 flow to the first water side interface 51k and the second water side interface 511, both the motor electronic control module radiator 101 and the first radiator 10 participate in the coolant circulation.

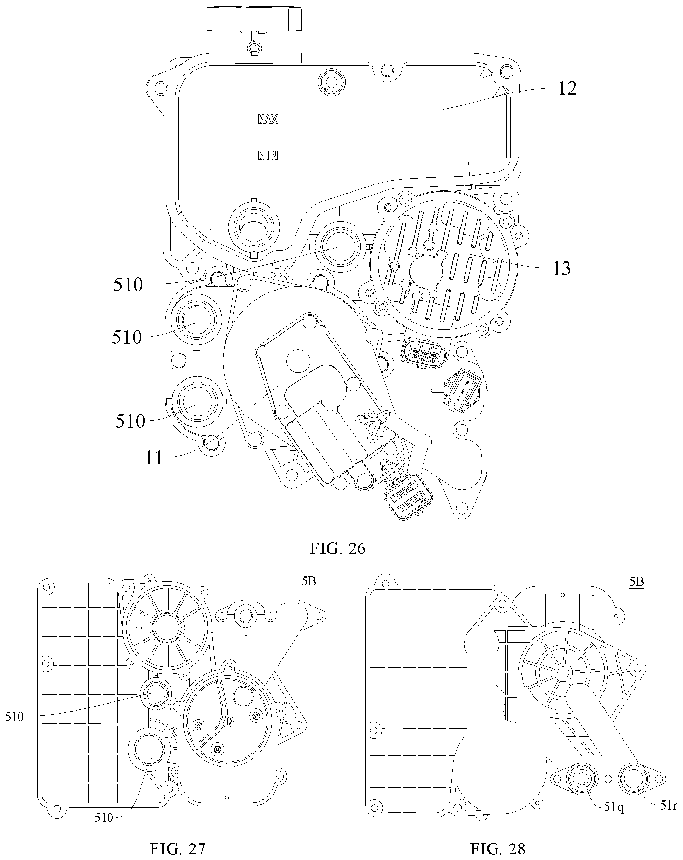

In some examples of the present disclosure, as shown in FIG. 16 and FIG. 28, the second flow channel plate 5B is further arranged with a third interface of the heat exchanger 51q and a fourth interface of the heat exchanger 51r. The third interface of the heat exchanger 51q and the fourth interface of the heat exchanger 51r are respectively connected to the second heat exchange flow channel outside the second flow channel plate 5B. The first switching valve 11 is respectively connected to the third interface of the heat exchanger 51q and the fourth interface of the heat exchanger 51r. The first switching valve 11 operates to make the coolant flowing to it flow directly to itself and/or through the second heat exchange flow channel. It can be seen that the first switching valve 11 can be used to control whether the second heat exchange flow channel participates in the coolant circulation, and it is possible to control the first switching valve 11 to switch the integrated module 5 to an appropriate working mode according to the heat dissipation requirements so as to meet different heat dissipation requirements.

For example, when the first switching valve 11 operates to make the coolant flowing to the first switching valve 11 flow directly to the first switching valve 11 and the coolant discharged from the first switching valve 11 flows to the first water side interface 51k, the first switching valve 11 and the motor electronic control module radiator 101 participate in the coolant circulation. When the first switching valve 11 operates to make the coolant flowing to the first switching valve 11 flow directly to the first switching valve 11 and the coolant discharged from the first switching valve 11 flows to the second water side interface 511, the first switching valve 11 and the first radiator 10 participate in the coolant circulation. When the first switching valve 11 operates to make the coolant flowing to the first switching valve 11 flow directly to the first switching valve 11 and the coolant discharged from the first switching valve 11 flows to the first water side interface 51k and the second water side interface 511, the first switching valve 11, the motor electronic control module radiator 101 and the first radiator 10 participate in the coolant circulation. At this time, the first radiator 10 can take away the heat of the motor electronic control module radiator 101 through the coolant to reduce the temperature of the motor electronic control module radiator 101 and ensure the cooling effect on the motor electronic control module. This mode can be a high-temperature heat dissipation mode. When the coolant flowing to the first switching valve 11 flows to the first switching valve 11 through the second heat exchange flow channel and the coolant discharged from the first switching valve 11 flows to the first water side interface 51k, the first switching valve 11, the second heat exchange flow channel and the motor electronic control module radiator 101 participate in the coolant circulation. At this time, the coolant flowing through the second heat exchange flow channel can exchange heat for heat dissipation to reduce the temperature of the motor electronic control module radiator 101. This mode can be a heat pump working mode below -10 °C. When the coolant flowing to the first switching valve 11 flows to the first switching valve 11 through the second heat exchange flow channel and the coolant discharged from the first switching valve 11 flows to the second water side interface 511, the first switching valve 11, the second heat exchange flow channel and the first radiator 10 participate in the coolant circulation. When the coolant flowing to the first switching valve 11 flows to the first switching valve 11 through the second heat exchange flow channel and the coolant discharged from the first switching valve 11 flows to the first water side interface 51k and the second water side interface 511, the first switching valve 11, the second heat exchange flow channel, the first radiator 10 and the motor electronic control module radiator 101 participate in the coolant circulation. At this time, the coolant flowing through the second heat exchange flow channel and the first radiator 10 can both exchange heat for heat dissipation to reduce the temperature of the motor electronic control module radiator 101. This mode can be a heat pump working mode between -10 °C and 10 °C.

For example, the first switching valve 11 has a first switching port, a second switching port, a third switching port and a fourth switching port. The first switching port is connected to the first radiator 10 through the second water side interface 51l, the second switching port is connected to the motor electronic control module radiator 101 through the first water side interface 51k, the third switching port is connected to the third interface of the heat exchanger 51q, and the fourth switching port is connected to the fourth interface of the heat exchanger 51r and is further connected to the motor electronic control module radiator 101.

In an example, when the integrated module 5 is used in the vehicle 200, in the motor heating mode, the heat exchange component to which the refrigerant flows after being throttled and depressurized by the throttle valve group 52 can have a second heat exchange flow channel, so that the heat exchange component links the cycles of the cooling side and the coolant side. Of course, in the motor heating mode, the heat exchange component to which the refrigerant flows after being throttled and depressurized by the throttle valve group 52 may not be arranged with a second heat exchange flow channel.

For example, in the example of FIG. 2, the integrated module 5 further includes a first heat exchanger 6. The first heat exchanger 6 has a first heat exchange flow channel and a second heat exchange flow channel that exchange heat with each other. The first heat exchange flow channel is used for circulating the refrigerant, and the second heat exchange flow channel is used for flowing the coolant, and then the first heat exchange flow channel is connected to the first flow channel plate 5A, and the second heat exchange flow channel is connected to the second flow channel plate 5B. Thus, the refrigerant in the first heat exchange flow channel can exchange heat with the coolant in the second heat exchange flow channel, so that the refrigerant in the first heat exchange flow channel can indirectly cool the motor electronic control module radiator 101 through the coolant, further ensuring that the motor electronic control module has an appropriate working temperature. At the same time, the integrated module 5 integrates the refrigerant side and the coolant side (the coolant side can be understood as the waste heat recovery device of the motor electronic control module), effectively improving the degree of integration of the integrated module 5, effectively saving the layout space inside the vehicle, and achieving platform-based layout.

In some examples of the present disclosure, as shown in FIG. 1, FIG. 16, and FIG. 26, the second flow channel plate 5B is arranged with a switching valve interface 51j. The first switching valve 11 is fixed to the second flow channel plate 5B, and the first switching valve 11 is connected to the switching valve interface 51j. Thus, the layout of the first switching valve 11 is facilitated, and the communication between the first switching valve 11 and the flow channels in the second flow channel plate 5B is realized. The components connected to the first switching valve 11 can be connected to the second flow channel plate 5B to realize the connection with the first switching valve 11, and at the same time, the degree of integration of the integrated module 5 is improved, which is conducive to saving the layout space inside the vehicle and achieving platform-based layout.

In an example, the number of the switching valve interface 51j can be equal to the number of the switching port of the first switching valve 11.

In some examples of the present disclosure, as shown in FIG. 1, the second flow channel plate 5B is arranged with a water tank interface 51s. The integrated module 5 further includes a make-up water tank 12. The make-up water tank 12 is arranged on the second flow channel plate 5B, and the make-up water tank 12 is connected to the water tank interface 51s to supply water to the internal water channels, to increase the amount of coolant in the coolant circuit 9 when the internal water channels lack coolant and ensure the cooling effect of the coolant circuit 9 on the motor electronic control module radiator 101, and thus facilitate liquid shortage protection. Of course, the coolant in the coolant circuit 9 is not limited to water. It can be understood that the position of the make-up water tank 12 in the coolant circuit 9 can be specifically set according to actual needs.

In an example, the second flow channel plate 5B includes a third plate body 513 and a fourth plate body 514. A plurality of flow channels P are formed between the third plate body 513 and the fourth plate body 514, and the plurality of flow channels P form a portion of the coolant circuit 9. The third plate body 513 and the fourth plate body 514 are injection molded parts respectively.

In some examples, as shown in FIG. 1, the second flow channel plate 5B is further arranged with a water pump interface 51t. The integrated module 5 further includes a water pump 13. The water pump 13 is arranged on the second flow channel plate 5B and is connected to the water pump interface 51t to drive the liquid in the internal water channels to flow, so as to realize the circulating flow of the coolant in the coolant circuit 9. Thus, the layout of the water pump 13 is facilitated, and at the same time, the degree of integration of the integrated module 5 is improved.

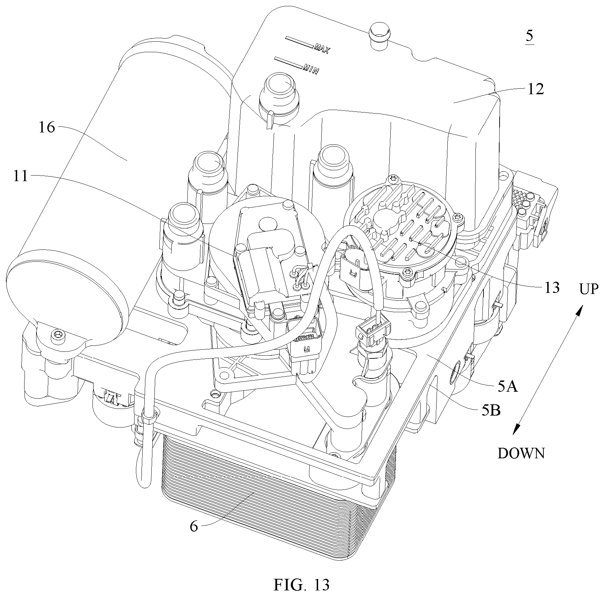

In some examples of the present disclosure, as shown in FIG. 13, the second flow channel plate 5B is fixedly connected to the first flow channel plate 5A, for example, by means of screws, to further improve the degree of integration of the integrated module 5 and better realize the modular design of the integrated module 5. Consequently, compared with the integrated modules in the existing electric vehicle technologies, the integrated module 5 of the present disclosure allows for flexible component integration and flow channel layout, enabling it to adapt to different vehicle models and installation spaces. It offers flexible arrangement options that can reduce the overall vehicle weight, decrease costs and energy consumption, and save the layout space of the whole vehicle. Furthermore, it is used for the installation of new configurations. Compared with the existing technologies, the integrated module 5 has a higher degree of integration as it integrates the refrigerant side + coolant side thermal management system 100 and facilitates the layout of the whole vehicle pipelines. Due to the optimized space layout in the front compartment, the layout of the whole vehicle is more reasonable and more conducive to the design of the whole vehicle platform.

For example, the first flow channel plate 5A and the second flow channel plate 5B are arranged in sequence along the thickness direction of the first flow channel plate 5A. The components corresponding to the coolant circuit 9 (such as the first switching valve 11, the water tank 12, and the water pump 13) are arranged on the side of the second flow channel plate 5B that is away from the first flow channel plate 5A. The components corresponding to the refrigerant circuit (such as the control valve group 52 and the throttle valve group 53) are arranged on the side of the first flow channel plate 5A that is away from the second flow channel plate 5B. The refrigerant side interface and the water side interface face two sides respectively, and the refrigerant pipeline and the coolant pipeline do not interfere with each other, which facilitates the assembly of the integrated module 5 and the layout of the whole vehicle pipelines. Due to the optimized space layout in the front compartment, the layout of the whole vehicle is more reasonable and beautiful. At the same time, it is convenient to realize the centralized layout of the wire harnesses of the various valves on the first flow channel plate 5A and those of the components on the second flow channel plate 5B, thus improving the regular routing of the connection line 50 of the integrated module 5. For example, the first flow channel plate 5A includes a first plate body 511 and a second plate body 512, and the second flow channel plate 5B is fixed on the side of the second plate body 512 that is away from the first plate body 511.

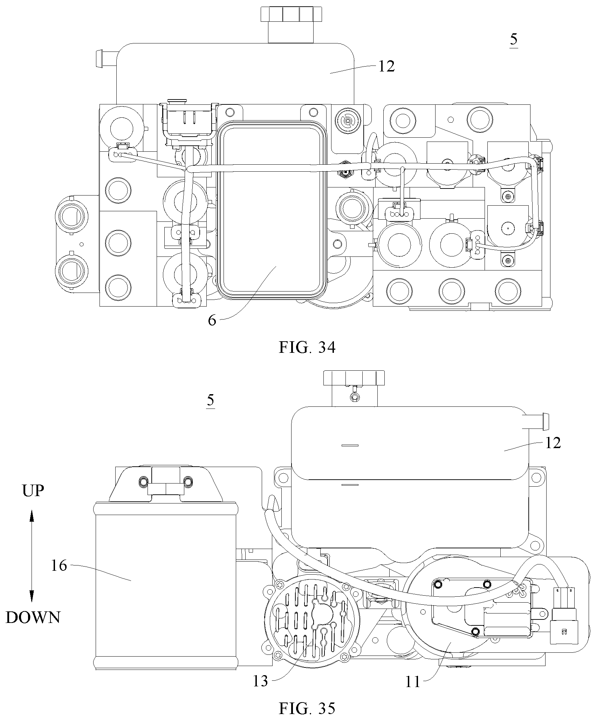

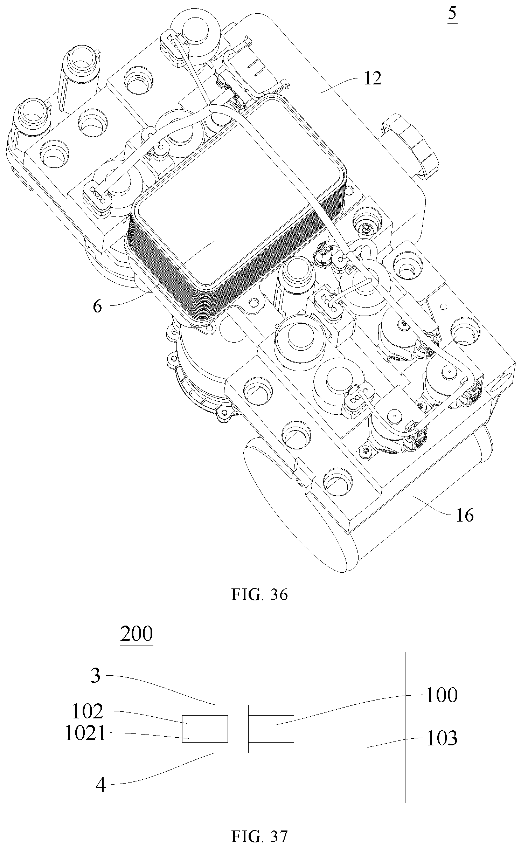

Of course, in other examples of the present disclosure, the plane where the first flow channel plate 5A is located and the plane where the second flow channel plate 5B is located are parallel or coincident. As shown in FIG. 34 to FIG. 36, the integrated module 5 has a first side and a second side on the two sides along the thickness direction of the first flow channel plate 5A. The components corresponding to the refrigerant circuit (such as the control valve group 52, the throttle valve group 53) and the components corresponding to the coolant circuit 9 (such as the first switching valve 11, the water tank 12, and the water pump 13) are all arranged on the first side or the second side. Then, the refrigerant side interface and the water side interface are located on the same side of the integrated module 5, which can further facilitate the layout of the whole vehicle, simplify the layout direction of the whole vehicle, and optimize the layout of the front compartment.

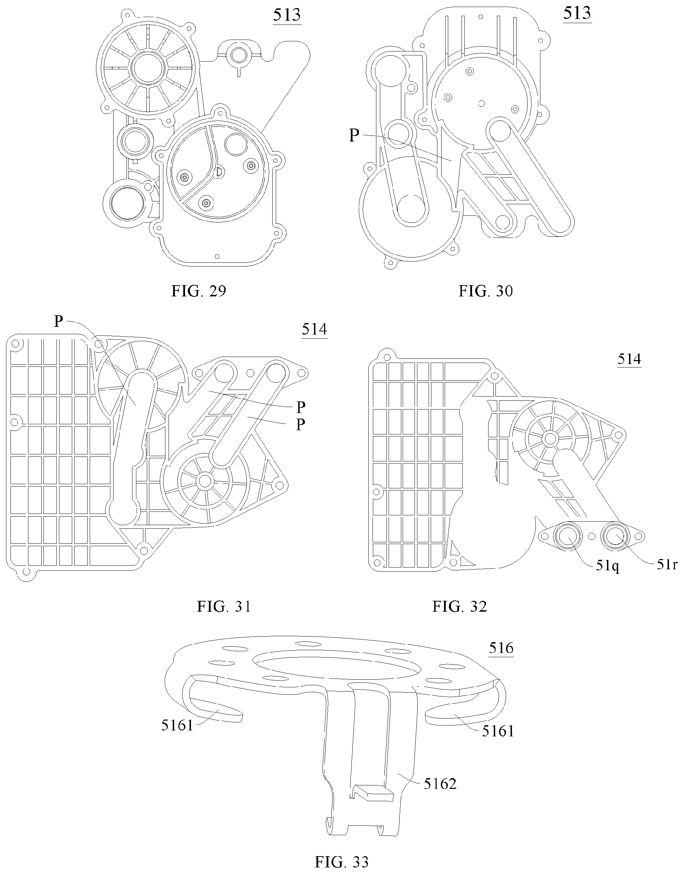

In some examples, as shown in FIG. 33, the integrated module 5 further includes a fixing piece 516. The fixing piece 516 is sleeved onto the electronic expansion valve (such as the first electronic expansion valve 535, the second electronic expansion valve 536). The fixing piece 516 is in snap fit with the first flow channel plate 5A, thereby using the snap fit between the fixing piece 516 and the first flow channel plate 5A to stably install the electronic expansion valve on the first flow channel plate 5A and prevent the electronic expansion valve from falling off from the first flow channel plate SA.

For example, the fixing piece 516 includes an elastic piece 5161 and an elastic hook 5162. The elastic piece 5161 abuts against the upper end surface of the first flow channel plate 5A, and the elastic hook 5162 is clamped with the clamping groove arranged on the side wall of the first flow channel plate 5A to realize the snap fit between the fixing piece 516 and the first flow channel plate 5A, and then make the electronic expansion valve conveniently and stably fixed on the first flow channel plate 5A through the fixing piece 516.

In some examples, the elastic piece 5161 is defined by bending a portion of the fixing piece 516. Such an arrangement simplifies the complexity of components on the fixing piece 516, thereby enhancing its overall strength and preventing the fixing piece 516 from being damaged by forces applied when the electronic expansion device is installed on the first flow channel plate SA.

As shown in FIG. 33, the fixing piece 516 includes two elastic pieces 5161 and one elastic hook 5162. The two elastic pieces 5161 are arranged oppositely, the elastic hook 5162 is arranged between the two elastic pieces 5161, the elastic hook 5162 is cantilevered, and the elastic hook 5162 extends along the thickness direction of the first flow channel plate 5A.

When it is necessary to install the electronic expansion valve on the first flow channel plate 5A, the electronic expansion valve should be operated to gradually approach the first flow channel plate 5A along the thickness direction of the first flow channel plate 5A. At this time, the two elastic pieces 5161 abut against the upper end surface of the first flow channel plate 5A, thus ensuring a preload between the electronic expansion valve and the first flow channel plate 5A and preventing the electronic expansion valve on the first flow channel plate 5A from shaking in the vertical direction. Meanwhile, the free end of the elastic hook 5162 contacts the side wall of the first flow channel plate 5A and deforms in the direction that is away from the first flow channel plate 5A under the action of the first flow channel plate 5A. When the electronic expansion valve is installed in place, the free end of the elastic hook 5162 recovers its deformation to be clamped and matched with the clamping groove on the side wall of the first flow channel plate 5A.

A hook is arranged on the free end of the elastic hook 5162. When the elastic hook 5162 recovers its deformation, the hook is clamped and matched with the side wall of the first flow channel plate 5A to fix the fixing piece 516 on the first flow channel plate 5A through the elastic hook 5162.

When it is necessary to remove the electronic expansion valve from the first flow channel plate 5A, the electronic expansion valve can be pressed in the direction close to the first flow channel plate 5A, so that the hook at the free end of the elastic hook 5162 is disengaged from the clamping groove of the first flow channel plate 5A. Then, the free end of the elastic hook 5162 is operated to deform in the direction that is away from the valve seat 10, so that the elastic hook 5162 is disengaged from the first flow channel plate 5A. Finally, the electronic expansion valve is operated to move in the direction that is away from the first flow channel plate 5A, so that the elastic piece 5161 is disengaged from the side wall of the first flow channel plate 5A, and then the electronic expansion valve is removed from the first flow channel plate 5A. It can be seen that the fixing piece 516 uses three-point fixation to ensure the stability of the coil of the electronic expansion valve and can realize the automatic installation of the electronic expansion valve.

The integrated module 5 of the present disclosure appropriately reduces the control components in the system principle, innovatively designs a multi-way valve body with rich functions, and integrates the control components in the system through a simple assembly method to realize the conversion and operation of the energy modes in the vehicle 200 system, which is convenient to meet the high-power (for example, 200kw) charging requirements of the vehicle 200 and safeguard the charging efficiency of the whole vehicle. Meanwhile, the valve body, flow channels, etc. of the integrated module 5 are designed with flexibility, facilitating adaptation to the varying installation space requirements of different vehicle models. This enhances the flexibility of the layout methods for the integrated module 5, which can reduce the overall vehicle weight, lower costs and energy consumption, and save on vehicle layout space.

The thermal management system for a vehicle 200, according to the example of the second aspect of the present disclosure, includes the integrated module 5 according to the example of the aforementioned first aspect of the present disclosure.

The vehicle 200 according to the example of the third aspect of the present disclosure includes a body 103, a power supply module 102, and an integrated module 5. The power supply module 102 includes a battery module 1021, a first heat exchange plate 3, and a second heat exchange plate 4. The first heat exchange plate 3 and the second heat exchange plate 4 are arranged on the battery module 1021 to exchange heat with the battery module 1021. The power supply module 102 is arranged on the body 103. The integrated module 5 is the one according to the example of the aforementioned first aspect of the present disclosure. The first flow channel plate 5A is fixed to the body 103. The first cold plate interface 51d and the second cold plate interface 51e are used for connecting to the first heat exchange plate 3, and the third cold plate interface 51f and the fourth cold plate interface 51g are used for connecting to the second heat exchange plate 4.

According to the vehicle 200 of the example of the present disclosure, by adopting the aforementioned integrated module 5, the battery module 1021 can maintain an optimal operating temperature. This not only reduces the frequency of maintenance and replacement of the battery module 1021 but also improves the charging efficiency and user-friendliness of vehicle 200. Furthermore, it facilitates a more rational layout design for vehicle 200.

In some examples of the present disclosure, the first heat exchange plate 3 and the second heat exchange plate 4 are arranged on the opposite side walls of the battery module 1021, thereby reducing the temperature difference within the battery module 1021 and improving its cyclic service life.

For example, the battery module 1021 can include at least one row of battery packs, and a battery pack includes at least one battery cell. When a battery pack includes multiple battery cells, the multiple battery cells can be arranged in sequence along the length direction of the first heat exchange plate 3. In an example, the battery cell has multiple side walls, and the multiple side walls include opposite heat exchange side walls. The area of the heat exchange side walls is larger than that of the other side walls. The first heat exchange plate 3 and the second heat exchange plate 4 are respectively in thermal conductive fit with the heat exchange side walls. However, it is not limited thereto.

The other components and operations of the vehicle 200 according to the example of the present disclosure are well-known to those skilled in the art and will not be described in detail here.

The following description will refer to FIG. 1 to FIG. 12 to describe in a specific example the thermal management system 100 with the integrated module 5 according to the example of the present disclosure. It is worth noting that the following description is only for exemplary illustration and is not a specific limitation on the present disclosure.

As shown in FIG. 1, the thermal management system 100 includes a compressor 1, an outdoor heat exchanger 2, a first heat exchange plate 3, a second heat exchange plate 4, an integrated module 5, a first heat exchanger 6, an in-vehicle evaporator 7, an in-vehicle condenser 8, a coolant circuit 9, a first radiator 10, a liquid storage tank 14, and a gas-liquid separator 16. The first heat exchanger 6 is a plate heat exchanger.

The integrated module 5 includes a first flow channel plate 5A, a second flow channel plate 5B, and a throttle valve group 52, a control valve group 53, a plug cover 56, a temperature sensor 57, a sealing ring 58, a third check valve 59, a fourth check valve 515, a connection line 50 arranged on the first flow channel plate 5A, and a first switching valve 11, a make-up water tank 12, and a water pump 13 arranged on the second flow channel plate 5B. The sealing ring 58 is used to seal the gap between the first heat exchanger 6 and the first flow channel plate 5A and the gap between the gas-liquid separator 16 and the first flow channel plate 5A. The connection line 50 can be connected to the above-mentioned valve bodies (such as the throttle valve group 52, the control valve group 53, the water pump 13, the first switching valve 11, etc.) for signal transmission. Moreover, the connection line 50 has multiple connection positions, and each connection position is set corresponding to a valve body. The distance between two adjacent connection positions is adapted to the distance between the corresponding two valve bodies. The distances between two adjacent ones among the multiple connection positions can be of different lengths, so as to realize the anti-error connection design of the connection line 50 and the valve bodies, which is convenient for the integrated layout and control of the whole vehicle. Interfaces 510 are respectively formed on the first flow channel plate 5A and the second flow channel plate 5B to connect corresponding components. The first switching valve 11 is installed and locked by screws through its own end face sealing structure. The water pump 13 is connected to the second flow channel plate 5B through its own double sealing structure and is locked by installation screws to ensure sealing. The flow channels of the first flow channel plate 5A are used for flowing refrigerant, and the flow channels of the second flow channel plate 5B are used for flowing coolant.

As shown in FIG. 13, in the up-down direction, the layout position of the make-up water tank 12 is relatively higher than that of the first heat exchanger 6. The make-up water tank 12 has a highest water level line and a lowest water level line, and the top of the first heat exchanger 6 is located between the highest water level line and the lowest water level line. Of course, as shown in FIG. 34 to FIG. 36, the top of the first heat exchanger 6 can further be located below the lowest water level line to fully ensure the heat exchange efficiency.

The inlet and outlet positions of the second heat exchange flow channel of the first heat exchanger 6 are opposite to those of the first heat exchange flow channel. The inlet of the second heat exchange flow channel is located above the outlet, and the inlet of the first heat exchange flow channel is located below the outlet to ensure the heat exchange efficiency. Of course, the first heat exchange flow channel is configured for top inlet and top outlet, and the second heat exchange flow channel can further be configured for top inlet and top outlet. (as shown in FIG. 34 to FIG. 36).

As shown in FIG. 1, the control valve group 53 includes a first on-off valve 533, a second on-off valve 534, an electronic expansion valve 535, a second electronic expansion valve 536, a third on-off valve 537, and a fourth on-off valve 538. The third on-off valve 537 is connected between the liquid storage tank 14 and the gas-liquid separator 16, and the fourth on-off valve 538 is connected between the compressor 1 and the outdoor heat exchanger 2. The throttle valve group 52 includes a first throttling element 521, a second throttling element 522, a third throttling element 523, and a fourth throttling element 524. The first on-off valve 533, the second on-off valve 534, the third on-off valve 537, and the fourth on-off valve 538 can be selected as solenoid valves respectively.

The thermal management system 100 has a battery cooling mode, a battery heating mode, a refrigeration mode, a battery cooling + refrigeration mode, a battery heating + refrigeration mode, a heating mode, a battery cooling + heating mode, a battery heating + heating mode, a cooling + warming mode, a battery cooling + refrigeration + warming mode, and a battery heating + refrigeration + warming mode.

As shown in FIG. 2, in the battery heating mode, the fourth on-off valve 538 and the second on-off valve 534 are closed, the third on-off valve 537 and the first on-off valve 533 are opened, the first electronic expansion valve 535 and the second electronic expansion valve 536 (for example, both the first electronic expansion valve 535 and the second electronic expansion valve 536 are large-diameter electronic expansion valves) are opened to achieve the throttling effect, and the first throttling element 521 and the second throttling element 522 are opened, while the third throttling element 523 and the fourth throttling element 524 are both closed.

At this time, the high-temperature and high-pressure refrigerant flows out of the compressor 1 and enters the integrated module 5 through the corresponding interface 510. After passing through the corresponding flow channels and the first on-off valve 533, it is distributed to the first electronic expansion valve 535 and the second electronic expansion valve 536, and then flows out of the integrated module 5 through the corresponding interface 510 and into the first heat exchange plate 3 and the second heat exchange plate 4. At this time, the refrigerant condenses and releases heat to heat the battery module 1021, thereby improving the battery life, improving the battery efficiency, increasing the battery capacity at low temperatures and the driving range of the whole vehicle, and effectively shortening the charging time. The refrigerant after releasing heat enters the integrated module 5 through the corresponding interface 510, then undergoes throttling expansion through the first throttling element 521 and the second throttling element 522 respectively and converges. The converged refrigerant enters the first heat exchanger 6 through the first check valve 54 for heat absorption and evaporation. The refrigerant that exits from the first heat exchanger 6 flows sequentially through the third on-off valve 537 and the gas-liquid separator 16, and then flows out of the integrated module 5 through the corresponding interface 510 and enters the compressor 1 for cyclic operation.

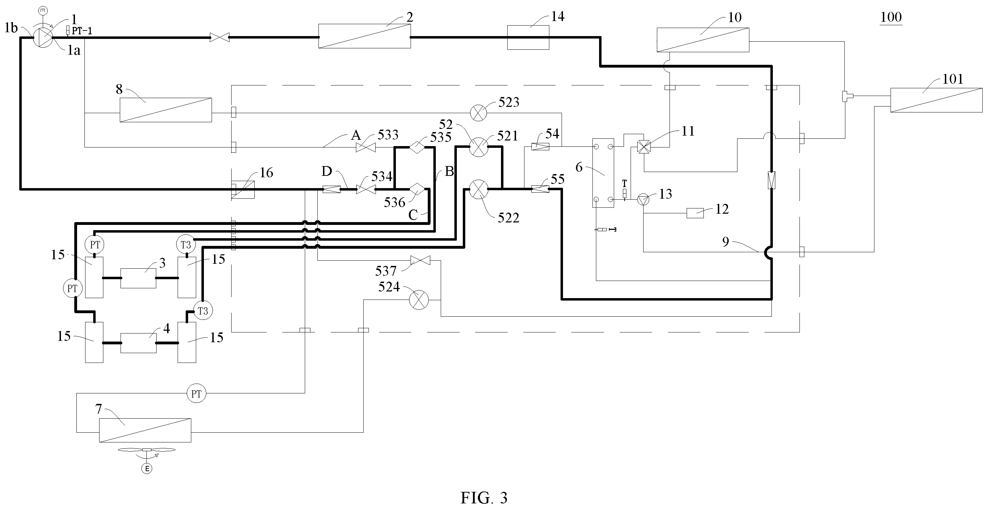

As shown in FIG. 3, in the battery cooling mode, the third on-off valve 537 and the first on-off valve 533 are closed, the fourth on-off valve 538 and the second on-off valve 534 are opened, the first electronic expansion valve 535 and the second electronic expansion valve 536 are opened to achieve the throttling effect, and the two first throttling elements 521 and the second throttling element 522 are opened, while the third throttling element 523 and the fourth throttling element 524 are both closed.

At this time, the compressor 1 discharges high-temperature and high-pressure gaseous refrigerant, which enters the outdoor heat exchanger 2 through the fourth on-off valve 538. After releasing heat and liquefying in the outdoor heat exchanger 2, the refrigerant becomes a medium-temperature and high-pressure liquid. The excess refrigerant is stored in the liquid storage tank 14 and then enters the integrated module 5 through the corresponding interface 510. It flows through the third check valve 59 and the second check valve 55 before entering the first throttling element 521 and the second throttling element 522 respectively for throttling. It flows out of the integrated module 5 through the corresponding interface 510 and enters the first heat exchange plate 3 and the second heat exchange plate 4 respectively. At this time, the low-temperature and low-pressure gas-liquid mixture absorbs the heat of the battery module 1021 and evaporates, enabling temperature reduction when the power battery overheats. Then, it flows into the integrated module 5 through the corresponding interface 510 again, converges after being throttled by the first electronic expansion valve 535 or the second electronic expansion valve 536, and then flows successively through the second on-off valve 534, the fourth check valve 515, and the gas-liquid separator 16, and flows out of the integrated module 5 through the corresponding interface 510. Finally, it enters the inlet 1b of the compressor 1 through the connecting pipeline for cyclic operation.

It can be seen that in the battery cooling mode, the multi-cold plate design can improve the safety and durability of the battery module 1021, accelerate the cooling speed of the temperature of the battery module 1021, and realize heat exchange under high-power charging.

As shown in FIG. 4, in the heating mode, the refrigerant flows out of the compressor 1 and enters the in-vehicle condenser 8. The refrigerant releases heat in the in-vehicle condenser 8, and hot air is blown into the vehicle through the blower to heat the interior of the vehicle. The refrigerant that comes out of the in-vehicle condenser 8 enters the integrated module 5 through the corresponding interface 510, undergoes throttling and expansion through the third throttling element 523, and then enters the first heat exchanger 6 through the corresponding flow channel to exchange heat with the water side, to achieve heat absorption and evaporation (absorbing the waste heat of the motor electronic control module, etc.). The refrigerant coming out of the first heat exchanger 6 flows out of the integrated module 5 through the third on-off valve 537 and the gas-liquid separator 16 from the corresponding interface 510 and flows back to the compressor 1 for cyclic operation.

As shown in FIG. 5, in the battery heating + heating mode, the fourth on-off valve 538 and the second on-off valve 534 are closed, the third on-off valve 537 and the first on-off valve 533 are opened, the first electronic expansion valve 535 and the second electronic expansion valve 536 are opened to achieve the throttling effect, the first throttling element 521 and the second throttling element 522 are opened, the fourth throttling element 524 is closed, and the third throttling element 523 is opened.

At this time, the compressor 1 discharges high-temperature and high-pressure gaseous refrigerant. The refrigerant is divided into two lines. One line enters the in-vehicle condenser 8. The refrigerant releases heat in the in-vehicle condenser 8. The heat released by the in-vehicle condenser 8 is combined with that of the wind heating PTC, and then the hot air is blown into the vehicle through the blower to heat the interior of the vehicle. The refrigerant coming out of the in-vehicle condenser 8 enters the integrated module 5 through the corresponding interface 510 and undergoes throttling and expansion through the third throttling element 523. The other line enters the integrated module 5 through the corresponding interface 510 and is distributed to the first electronic expansion valve 535 and the second electronic expansion valve 536 through the first on-off valve 533, and then flows to the first heat exchange plate 3 and the second heat exchange plate 4 respectively to achieve battery heating, improve battery life, improve battery efficiency, increase battery capacity at low temperatures and increase the driving range of the whole vehicle, and effectively shorten the charging time. The refrigerant that has released heat from the first heat exchange plate 3 and the second heat exchange plate 4 enters the integrated module 5 through the corresponding interface 510 and converges to the first check valve 54 through the first throttling element 521 and the second throttling element 522 respectively. The refrigerant flowing through the first check valve 54 and the refrigerant flowing through the third throttling element 523 converge and then enter the first heat exchanger 6 for heat absorption and evaporation. The refrigerant coming out of the first heat exchanger 6 flows to the gas-liquid separator 16 through the third on-off valve 537 and flows out of the integrated module 5 through the corresponding interface 510 and finally enters the compressor 1 for cyclic operation.

As shown in FIG. 6, in the battery cooling + heating mode, the third on-off valve 537 and the first on-off valve 533 are closed. The fourth on-off valve 538 and the second on-off valve 534 are opened. The first electronic expansion valve 535 and the second electronic expansion valve 536 are opened to achieve the throttling effect. The first throttling element 521 and the second throttling element 522 are opened. The fourth throttling element 524 is closed, and the third throttling element 523 is opened.

At this time, the compressor 1 discharges high-temperature and high-pressure gaseous refrigerant. The refrigerant is divided into two lines. One line enters the outdoor heat exchanger 2, where it releases heat and liquefies into a medium-temperature and high-pressure liquid. It then passes through the corresponding interface 510 into the integrated module 5 and subsequently through the third check valve 59. The other line enters the in-vehicle condenser 8, where the refrigerant releases heat. The heat released by the in-vehicle condenser 8 is combined with the wind heating PTC, and then the hot air is blown into the vehicle through a blower to heat the interior of the vehicle. The refrigerant coming out of the in-vehicle condenser 8 enters the integrated module 5 through the corresponding interface 510. After passing through the third throttling element 523 for throttling and expansion, it enters the first heat exchanger 6 for heat absorption and evaporation. The refrigerant coming out of the first heat exchanger 6 converges with the refrigerant from the above-mentioned line that passes through the third check valve 59 and is then distributed to the first throttling element 521 and the second throttling element 522 through the second check valve 55 to flow to the first heat exchange plate 3 and the second heat exchange plate 4 respectively. The low-temperature and low-pressure gas-liquid mixture absorbs the heat of the battery module 1021 and evaporates, enabling temperature reduction when the power battery overheats. The refrigerant from the first heat exchange plate 3 and the second heat exchange plate 4 enters the integrated module 5 through the corresponding interface 510 again, converges to the second on-off valve 534, flows through the fourth check valve 515 and the gas-liquid separator 16, then flows out of the integrated module 5 through the corresponding interface 510 and finally enters the compressor 1 for cyclic operation.

As shown in FIG. 7, in the refrigeration mode, the first on-off valve 533, the second on-off valve 534, and the third on-off valve 537 are closed, while the fourth on-off valve 538 is opened. At this time, the compressor 1 discharges high-temperature and high-pressure gaseous refrigerant, which then enters the outdoor heat exchanger 2. The refrigerant releases heat and liquefies into a medium-temperature and high-pressure liquid in the outdoor heat exchanger 2. Then, it enters the integrated module 5 through the corresponding interface 510 and flows sequentially through the third check valve 59 and the fourth throttling element 524 before exiting the integrated module 5. The low-temperature and low-pressure gas-liquid mixture flows to the in-vehicle evaporator 7 to absorb heat and evaporate, causing the temperature of the passenger compartment to drop. The low-temperature and low-pressure gas enters the integrated module 5 again, enters the gas-liquid separator 16 through the corresponding flow channel, and then flows out of the integrated module 5 through the corresponding interface 510 to flow back to the compressor 1 for cyclic operation.

As shown in FIG. 8, in the battery heating + refrigeration mode, the third on-off valve 537 is closed. The fourth on-off valve 538, the first on-off valve 533, and the second on-off valve 534 are opened. The first electronic expansion valve 535 and the second electronic expansion valve 536 are opened to achieve the throttling effect. The first throttling element 521 and the second throttling element 522 (both of which are bidirectional throttling valves, such as bidirectional electronic expansion valves, capable of regulating the flow rate to a certain extent) are opened. The fourth throttling element 524 is opened, while the third throttling element 523 is closed.

At this time, the compressor 1 discharges high-temperature and high-pressure gaseous refrigerant. The refrigerant is divided into two lines. One line passes through the fourth on-off valve 538 and enters the outdoor heat exchanger 2, where it releases heat and liquefies into a medium-temperature and high-pressure liquid. The excess refrigerant is stored in the liquid storage tank 14. The refrigerant enters the integrated module 5 through the corresponding interface 510 and then passes through the third check valve 59. The other line enters the integrated module 5 through the corresponding interface 510 and is then distributed to the first electronic expansion valve 535 and the second electronic expansion valve 536 through the corresponding flow channel and the first on-off valve 533. Subsequently, it flows to the first heat exchange plate 3 and the second heat exchange plate 4, achieving heating of the battery module 1021, improving battery life and efficiency, as well as increasing battery capacity at low temperatures, thereby enhancing the driving range of the whole vehicle, and effectively shortening the charging time. The refrigerant that has released heat enters the integrated module 5 through the corresponding interface 510, passes through the first throttling element 521 and the second throttling element 522 respectively, and then converges to the first check valve 54. It enters the first heat exchanger 6 for heat absorption and evaporation, and converges with the refrigerant from the above-mentioned line to form a gas-liquid mixture. The mixture enters the fourth throttling element 524 through the corresponding flow channel for throttling and expansion, and then flows out of the integrated module 5 through the corresponding interface 510. The low-temperature and low-pressure gas-liquid mixture then enters the in-vehicle evaporator 7 to absorb heat and evaporate, causing the temperature of the passenger compartment to drop. The low-temperature and low-pressure gas passes through the corresponding interface 510 to enter the integrated module 5. It then enters the gas-liquid separator 16 through the corresponding flow channel, and subsequently flows out of the integrated module 5 through the corresponding interface 510 and flows to the compressor 1 for cyclic operation.

As shown in FIG. 9, in the battery cooling + refrigeration mode, the third on-off valve 537 and the first on-off valve 533 are closed. The fourth on-off valve 538 and the second on-off valve 534 are opened. The first electronic expansion valve 535 and the second electronic expansion valve 536 are opened to achieve the throttling effect. The first throttling element 521 and the second throttling element 522 are opened. The fourth throttling element 524 is opened, while the third throttling element 523 is closed.

At this time, the compressor 1 discharges high-temperature and high-pressure gaseous refrigerant, which then enters the outdoor heat exchanger 2. The refrigerant liquefies into a medium-temperature and high-pressure liquid in the outdoor heat exchanger 2. The excess liquid is stored in the liquid storage tank 14. The refrigerant enters the integrated module 5 through the corresponding interface 510 and is divided into two lines after passing through the third check valve 50. One line passes through the second check valve 55 and is then distributed to the first throttling element 521 and the second throttling element 522 to flow to the first heat exchange plate 3 and the second heat exchange plate 4 respectively, achieving temperature reduction when the power battery overheats. The refrigerant enters the integrated module 5 again through the corresponding interface 510. The refrigerant in the first heat exchange plate 3 flows through the first electronic expansion valve 535, and the refrigerant in the second heat exchange plate 4 flows through the second electronic expansion valve 536. The two converge to flow through the second on-off valve 534 together. The other line passes through the fourth throttling element 524 and flows out of the integrated module 5 through the corresponding interface 510. The low-temperature and low-pressure gas-liquid mixture enters the in-vehicle evaporator 7 for heat absorption and evaporation, causing the temperature of the passenger compartment to drop. The low-temperature and low-pressure gas enters the integrated module 5 again through the corresponding interface 510, converges with the refrigerant from the above-mentioned line, and then enters the gas-liquid separator 16, and subsequently exits the integrated module 5 through the corresponding interface 510 and flows back to the compressor 1 for cyclic operation.

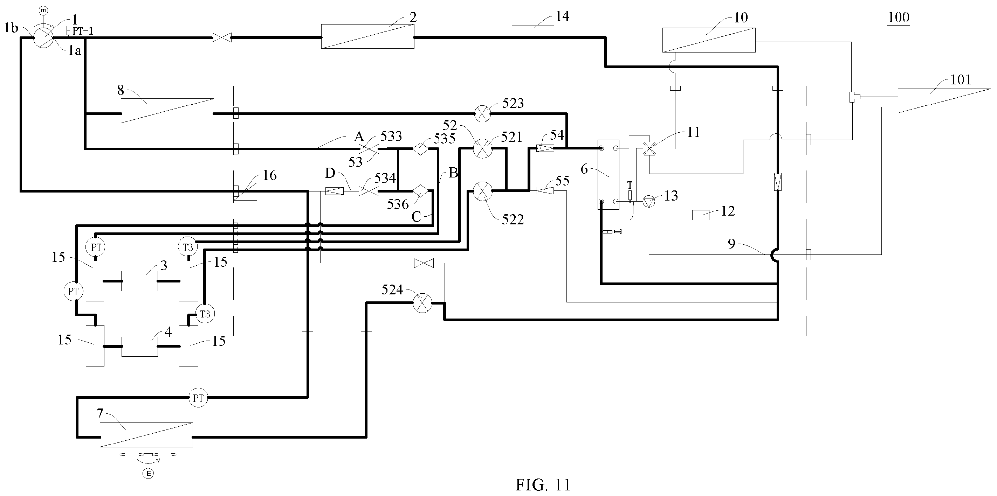

As shown in FIG. 11, in the refrigeration + warming mode, the third on-off valve 537 and the fourth on-off valve 538 are opened, while the first on-off valve 533 and the second on-off valve 534 are closed.

At this time, the high-temperature and high-pressure gaseous refrigerant discharged by the compressor is divided into two lines. One line enters the outdoor heat exchanger 2, where it releases heat and liquefies into a medium-temperature and high-pressure liquid. Then it enters the integrated module 5 through the corresponding interface 510. It enters the fourth throttling element 524, which is a throttling expansion valve, through the check valve and the internal flow channel of the valve seat 51. The low-temperature and low-pressure gas-liquid mixture enters the in-vehicle evaporator 7 for heat absorption and evaporation to absorb the heat in the environment, causing the temperature of the passenger compartment to drop. The low-temperature and low-pressure gaseous refrigerant enters the integrated module 5 again and enters the gas-liquid separator 16 through the internal flow channel of the valve seat 51. The other line enters the in-vehicle condenser 8 to release heat, and the hot air is blown into the vehicle through the blower to heat the interior of the vehicle. The refrigerant coming out of the in-vehicle condenser 8 enters the integrated module 5 through the corresponding interface 510. It then passes through the internal flow channel of the valve seat 51, undergoes throttling and expansion through the third throttling element 523, and subsequently enters the first heat exchanger 6 through the internal flow channel of the valve seat 51 for heat absorption and evaporation. At this time, the refrigerant in the first heat exchange flow line can absorb the waste heat of the motor electronic control module of the coolant in the second heat exchange flow line. The refrigerant coming out of the first heat exchanger 6 enters the third on-off valve 537 through the flow channel and then enters the gas-liquid separator 16 through the flow channel. The refrigerant flows from the gas-liquid separator 16 through the corresponding interface 510 to the inlet 1b and enters the compressor 1.

It can be seen that in the refrigeration + warming mode, it can be used to realize defogging and dehumidification in the vehicle. For example, the in-vehicle condenser 8 can remove window fog and frost, and the in-vehicle evaporator 7 can reduce the humidity in the vehicle.

As shown in FIG. 11, in the battery heating + refrigeration + warming mode, the third on-off valve 537 and the second on-off valve 534 are closed, and the fourth on-off valve 538 and the first on-off valve 533 are opened. Meanwhile, the first electronic expansion valve 535 and the second electronic expansion valve 536 are opened to achieve the throttling effect. Additionally, the first throttling element 521 and the second throttling element 522 are opened, the fourth throttling element 524 is closed, and the third throttling element 523 is opened.

At this time, the high-temperature and high-pressure refrigerant flows out of the compressor 1 and is divided into three lines. The first line enters the outdoor heat exchanger 2. After the refrigerant releases heat and liquefies into a medium-temperature and high-pressure liquid in the outdoor heat exchanger 2, it enters the integrated module 5 through the corresponding interface 510 and flows through the third check valve 59. The second line enters the in-vehicle condenser 8. The refrigerant releases heat in the in-vehicle condenser 8. The heat released by the in-vehicle condenser 8 is combined with that of the wind heating PTC, and then the hot air is blown into the vehicle through the blower to heat the interior of the vehicle. The refrigerant coming out of the in-vehicle condenser 8 enters the integrated module 5 through the corresponding interface 510 and flows through the third throttling element 523 for throttling and expansion. The third line enters the integrated module 5 through the corresponding interface 510 and is distributed to the first electronic expansion valve 535 and the second electronic expansion valve 536 through the first on-off valve 533, and then flows to the first heat exchange plate 3 and the second heat exchange plate 4 respectively to achieve battery heating, improve battery life, improve battery efficiency, increase the battery capacity at low temperatures and the driving range of the whole vehicle, and effectively shorten the charging time. The refrigerant in the first heat exchange plate 3 and the second heat exchange plate 4 enters the integrated module 5 again through the corresponding interface 510 and flows through the first throttling element 521 and the second throttling element 522 respectively for throttling and expansion, and then converges to the first check valve 54. The refrigerant flowing through the first check valve 54 converges with the refrigerant flowing through the third throttling element 523 and then enters the first heat exchanger 6 together for heat absorption and evaporation. The refrigerant coming out of the first heat exchanger 6 converges with the refrigerant flowing out of the third check valve 59 and then enters the fourth throttling element 524 through the corresponding flow channel for throttling and expansion, and then flows out of the integrated module 5 through the corresponding interface 510. The low-temperature and low-pressure gas-liquid mixture enters the in-vehicle evaporator 7 for heat absorption and evaporation, that is, it absorbs the heat from the environment. The low-temperature and low-pressure gas enters the integrated module 5 through the corresponding interface 510, then enters the gas-liquid separator 16 through the corresponding flow channel, and finally flows out of the integrated module 5 through the corresponding interface 510 before entering the compressor 1 for cyclic operation.

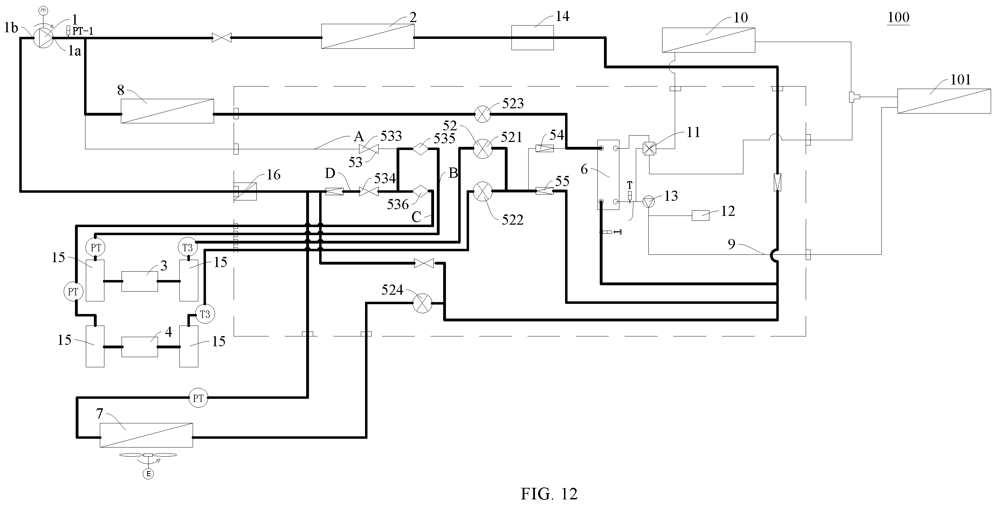

As shown in FIG. 12, in the battery cooling + refrigeration + warming mode, the third on-off valve 537 and the first on-off valve 533 are closed, while the fourth on-off valve 538 and the second on-off valve 534 are opened. The first electronic expansion valve 535 and the second electronic expansion valve 536 are opened to achieve the throttling effect. Additionally, the first throttling element 521 and the second throttling element 522 are opened, the fourth throttling element 524 is closed, and the third throttling element 523 is opened.

At this time, the compressor 1 discharges high-temperature and high-pressure gaseous refrigerant. The refrigerant is divided into two lines. The first line's refrigerant enters the outdoor heat exchanger 2. After the refrigerant of the first line releases heat and liquefies into a medium-temperature and high-pressure liquid in the outdoor heat exchanger 2, the refrigerant of the first line enters the integrated module 5 through the corresponding interface 510 and flows through the third check valve 59. The second line enters the in-vehicle condenser 8. The refrigerant in the in-vehicle condenser 8 releases heat. The heat released by the in-vehicle condenser 8 is combined with that of the wind heating PTC, and then hot air is blown into the vehicle through the blower to heat the interior of the vehicle. The refrigerant coming out of the in-vehicle condenser 8 enters the integrated module 5 through the corresponding interface 510, passes through the corresponding flow channel, enters the third throttling element 523 for throttling and expansion, and then enters the first heat exchanger 6. After it converges with the refrigerant flowing through the third check valve 59, it is divided into two lines again. The first line exits the integrated module 5 through the corresponding interface 510 after passing through the fourth throttling element 524, which is the throttling expansion valve. The low-temperature and low-pressure gas-liquid mixture then flows into the in-vehicle evaporator 7 for heat absorption and evaporation, causing the temperature of the passenger compartment to drop. The low-temperature and low-pressure gas then enters the integrated module 5 through the corresponding interface 510 and returns to the compressor 1 through the gas-liquid separator 16. The second line is distributed to the first throttling element 521 and the second throttling element 522 through the second check valve 55, flowing respectively to the first heat exchange plate 3 and the second heat exchange plate 4 to absorb heat from the battery module 1021 and evaporate, thereby achieving temperature reduction when the power battery overheats. The refrigerant in the first heat exchange plate 3 and the second heat exchange plate 4 converges to the second on-off valve 534, then flows out of the integrated module 5 through the fourth check valve 515 and the gas-liquid separator 16 and finally enters the compressor 1 for cyclic operation.

In the description of the present disclosure, it should be understood that the orientation or positional relationships indicated by terms such as "center", "longitudinal", "transverse", "length", "width", "thickness", "upper", "lower", "front", "rear", "left", "right", "vertical", "horizontal", "top", "bottom", "inner", "outer", "axial", "radial", "circumferential", etc. are based on the orientation or positional relationships shown in the accompanying drawings, and are merely for the convenience of describing the present disclosure and simplifying the description. They do not indicate or imply that the referred device or element must have a specific orientation, be constructed and operated in a specific orientation, and thus should not be construed as a limitation on the present disclosure. In addition, features defined as "first" and "second" may explicitly or implicitly include one or more of such features. In the description of the present disclosure, unless otherwise specified, the meaning of "plural" is two or more.

In the description of the present disclosure, it should be noted that unless otherwise explicitly specified and limited, the terms "mount", "connect", "connection", and "fix" should be understood in a broad sense. For example, a connection may be a fixed connection, a detachable connection, or an integral connection; or the connection may be a mechanical connection or an electrical connection; or the connection may be a direct connection, an indirect connection through an intermediary, or internal communication between two elements or mutual action relationship between two elements, unless otherwise specified explicitly. A person of ordinary skill in the art can understand specific meanings of the terms in the present disclosure based on specific situations.

In the description of this specification, the description of the reference terms "an example", "some examples", "an example", "a specific example", "some examples", and the like means that specific features, structures, materials or characteristics described in combination with the example(s) or example(s) are included in at least one example or example of the present disclosure. In this specification, exemplary descriptions of the foregoing terms do not necessarily refer to the same example or example. In addition, the described specific features, structures, materials, or characteristics may be combined in a proper manner in any one or more of the examples or examples.

In the present disclosure, unless otherwise clearly stipulated and defined, the first feature being "on" or "under" the second feature may mean that the first and second features are in direct contact, or that the first and second features are in indirect contact through an intermediate medium. Moreover, the first feature being "above", "over", or "on top of" the second feature may mean that the first feature is directly above or obliquely above the second feature, or merely indicates that the horizontal height of the first feature is higher than that of the second feature. The first feature being "below", "under", or "beneath" the second feature may mean that the first feature is directly below or obliquely below the second feature, or merely indicates that the horizontal height of the first feature is lower than that of the second feature.

Although the examples of the present disclosure have been shown and described above, it can be understood that, the foregoing examples are exemplary and should not be understood as limitation to the present disclosure. A person of ordinary skill in the art can make changes, modifications, replacements, or variations to the foregoing examples within the scope of the present disclosure.

## Claims

1. An integrated module (5) for a vehicle (200), the vehicle (200) comprising a battery module (1021), a first heat exchange plate (3) and a second heat exchange plate (4), the first heat exchange plate (3) and the second heat exchange plate (4) exchanging heat with the battery module (1021) respectively, the integrated module (5) comprising:
a first flow channel plate (5A), the first flow channel plate (5A) being arranged with an air exhaust interface (51a), and a first cold plate interface (51d) to a fourth cold plate interface (51g), the air exhaust interface (51a) being used to connect to an outlet (1a) of a compressor (1) outside the first flow channel plate (5A), the first cold plate interface (51d) and the second cold plate interface (51e) being used to connect to the first heat exchange plate (3), the third cold plate interface (51f) and the fourth cold plate interface (51g) being used to connect to the second heat exchange plate (4);
a plurality of refrigerant flow channels being arranged inside the first flow channel plate (5A), the plurality of refrigerant flow channels comprising a first main line (A), a first branch line (B) and a second branch line (C), the first main line (A) being connected to the air exhaust interface (51a), the first branch line (B) being connected to the first cold plate interface (51d), the second branch line (C) being connected to the third cold plate interface (51f), the first main line (A) being connected to the first branch line (B) and the second branch line (C) respectively;
a control valve group (53), the control valve group (53) being arranged on the first flow channel plate (5A), the control valve group (53) comprising a first on-off valve (533), a first electronic expansion valve (535) and a second electronic expansion valve (536), the first on-off valve (533) being connected to the first main line (A) to control its connection/disconnection, the first electronic expansion valve (535) being connected to the first branch line (B), the second electronic expansion valve (536) being connected to the second branch line (C).

2. The integrated module (5) for a vehicle (200) according to claim 1, wherein the first flow channel plate (5A) is further arranged with an outdoor heat exchanger interface (51v) used to connect to an outdoor heat exchanger (2) and a return gas interface (51c) connected to an inlet (1b) of the compressor (1);
the plurality of refrigerant flow channels further comprise a second main line (D), the second main line (D) is connected to the return gas interface (51c), the second main line (D) is connected to the first branch line (B) and the second branch line (C) respectively;
the integrated module (5) further comprises a throttle valve group (52), the first flow channel plate (5A) is arranged with a throttle valve interface (51u) connected to the throttle valve group (52), the throttle valve group (52) is connected to the second cold plate interface (51e) and the fourth cold plate interface (51g) respectively, the outdoor heat exchanger interface (51v) is connected to the throttle valve group (52).

3. The integrated module (5) for a vehicle (200) according to claim 2, wherein the control valve group (53) further comprises a second on-off valve (534), the second on-off valve (534) is arranged on the first flow channel plate (5A) and is connected to the second main line (D) to control its connection/disconnection.

4. The integrated module (5) for a vehicle (200) according to claim 2 or 3, wherein the first flow channel plate (5A) is arranged with a first interface of the heat exchanger (51o), the control valve group (53) comprises a first check valve (54) and a second check valve (55), the first check valve (54) is arranged on the first flow channel plate (5A) and is connected to the throttle valve group (52) and the first interface of the heat exchanger (51o) respectively, the first check valve (54) guides the refrigerant in a single direction towards the first interface of the heat exchanger (51o);
the second check valve (55) is arranged on the first flow channel plate (5A), the second check valve (55) is connected to the throttle valve group (52) and the outdoor heat exchanger interface (51v) respectively to guide the refrigerant in a single direction towards the throttle valve group (52).

5. The integrated module (5) for a vehicle (200) according to any one of claims 2 to 4, wherein the throttle valve group (52) comprises a first throttling element (521) and a second throttling element (522), the first throttling element (521) is arranged on the first flow channel plate (5A) and communicates with the second cold plate interface (51e), the second throttling element (522) is arranged on the first flow channel plate (5A) and communicates with the fourth cold plate interface (51g), the first throttling element (521) and the second throttling element (522) communicate with the outdoor heat exchanger interface (51v) respectively.

6. The integrated module (5) for a vehicle (200) according to any one of claims 2 to 5, wherein the first flow channel plate (5A) is arranged with a first interface of the heat exchanger (51o) and a second interface of the heat exchanger (51p), the integrated module (5) further comprises a first heat exchanger (6) arranged on the first flow channel plate (5A), the first interface of the heat exchanger (51o) and the second interface of the heat exchanger (51p) are connected to the first heat exchange flow channel of the first heat exchanger (6), the first interface of the heat exchanger (51o) is connected to the throttle valve group (52), the second interface of the heat exchanger (51p) is connected to the return gas interface (51c) through a first internal flow channel (G) inside the first flow channel plate (5A).

7. The integrated module (5) for a vehicle (200) according to claim 6, wherein the first flow channel plate (5A) is further arranged with an in-vehicle condenser outlet interface (51z), the integrated module (5) further comprises a third throttling element (523), the third throttling element (523) is arranged on the first flow channel plate (5A) and communicates with the in-vehicle condenser outlet interface (51z) and the first interface of the heat exchanger (51o) respectively.

8. The integrated module (5) for a vehicle (200) according to claim 6 or 7, wherein the control valve group (53) comprises a third on-off valve (537), the third on-off valve (537) is arranged on the first flow channel plate (5A) and is connected to the first internal flow channel (G) to control its connection/disconnection.

9. The integrated module (5) for a vehicle (200) according to any one of claims 2 to 8, wherein the first flow channel plate (5A) is further arranged with an evaporator inlet interface (51x) and an evaporator outlet interface (51y), the evaporator inlet interface (51x) and the evaporator outlet interface (51y) are respectively connected to two ends of an in-vehicle evaporator (7) outside the first flow channel plate (5A), an outlet flow channel (E) connecting the evaporator outlet interface (51y) and the return gas interface (51c) is arranged inside the first flow channel plate (5A), an inlet flow channel (F) connecting the evaporator inlet interface (51x) and the outdoor heat exchanger interface (51v) is arranged inside the first flow channel plate (5A);
the integrated module (5) further comprises a fourth throttling element (524), the fourth throttling element (524) is arranged on the first flow channel plate (5A) and is connected to the inlet flow channel (F).

10. The integrated module (5) for a vehicle (200) according to any one of claims 1 to 9, wherein the first flow channel plate (5A) comprises:
a first plate body (511), the first plate body (511) being arranged with a plurality of grooves (511a);
a second plate body (512), the second plate body (512) being fixed to the first plate body (511) to close the plurality of grooves (511a), the plurality of grooves (511a) and the second plate body (512) define external refrigerant flow channels for the circulation of refrigerant, the external refrigerant flow channels comprise a portion of the plurality of refrigerant flow channels.

11. The integrated module (5) for a vehicle (200) according to claim 10, wherein an internal flow channel (511c) is arranged inside the first plate body (511), the internal flow channel (511c) comprises a portion of the plurality of refrigerant flow channels.

12. The integrated module (5) for a vehicle (200) according to claim 11, wherein a plurality of external refrigerant flow channels are provided, and the cross-sectional shape of at least a portion of the external refrigerant flow channels is rectangular; and/or:
a plurality of internal flow channels (511c) are provided, and the cross-sectional shape of at least a portion of the internal flow channels (511c) is rectangular.

13. The integrated module for the vehicle (200) according to any one of claims 10 to 12, wherein a plurality of valve seats are arranged on the side of the first plate body that is away from the second plate body, the valve seats protrude in the direction that is away from the second plate body, and each of the valve seats defines a valve cavity, the plurality of control valves of the control valve group (53) are respectively arranged in the plurality of valve cavities in a one-to-one correspondence.

14. The integrated module (5) for a vehicle (200) according to claim 13, wherein the wall thickness of each valve cavity ranges from 3mm to 4mm.

15. The integrated module (5) for a vehicle (200) according to claim 13 or 14, wherein the center distance between two adjacent valve cavities is L, where L>R1+R2+a, where R1 is the inner diameter of one of the valve cavities, R2 is the inner diameter of the other valve cavity, and the value range of a is from 8mm to 15mm.

16. The integrated module (5) for a vehicle (200) according to any one of claims 10 to 15, wherein installation positions (511d) are arranged on adjacent side walls of the first plate body (511), the installation positions (511d) are suitable for being fixed to the body (103) of the vehicle (200).

17. The integrated module (5) for a vehicle (200) according to any one of claims 1 to 16, further comprising a second flow channel plate (5B), the second flow channel plate (5B) is arranged with a first water side interface (51k) and a second water side interface (51l), the first water side interface (51k) is suitable for being connected to a motor electronic control module radiator (101) outside the second flow channel plate (5B), the second water side interface (51l) is suitable for being connected to a first radiator (10) outside the second flow channel plate (5B);
the integrated module (5) further comprises a first switching valve (11), the first switching valve (11) is arranged on the second flow channel plate (5B) and communicates with a plurality of internal water channels inside the second flow channel plate (5B), the first switching valve (11) operates so that the coolant discharged from the first switching valve (11) flows towards the first water side interface (51k) and/or the second water side interface (511).

18. The integrated module (5) for a vehicle (200) according to claim 17, wherein the second flow channel plate (5B) is further arranged with a third interface of the heat exchanger (51q) and a fourth interface of the heat exchanger (51r), the third interface of the heat exchanger (51q) and the fourth interface of the heat exchanger (51r) are respectively connected to a second heat exchange flow channel outside the second flow channel plate (5B);
the first switching valve (11) is respectively connected to the third interface of the heat exchanger (51q) and the fourth interface of the heat exchanger (51r), the first switching valve (11) operates so that the coolant flowing towards the first switching valve (11) directly flows towards the first switching valve (11) and/or flows towards the first switching valve (11) through the second heat exchange flow channel.

19. The integrated module (5) for a vehicle (200) according to claim 18, wherein the second flow channel plate (5B) is arranged with a switching valve interface (51j), the first switching valve (11) is fixed to the second flow channel plate (5B) and is connected to the switching valve interface (51j).

20. The integrated module (5) for a vehicle (200) according to any one of claims 17 to 19, wherein the second flow channel plate (5B) is arranged with a water tank interface (51s), the integrated module (5) further comprises a make-up water tank (12), the make-up water tank (12) is arranged on the second flow channel plate (5B) and is connected to the water tank interface (51s) to supply water to the internal water channels.

21. The integrated module (5) for a vehicle (200) according to any one of claims 17 to 20, wherein the second flow channel plate (5B) is further arranged with a water pump interface (51t), the integrated module (5) further comprises a water pump (13), the water pump (13) is arranged on the second flow channel plate (5B) and is connected to the water pump interface (51t) to drive the liquid in the internal water channels to flow.

22. The integrated module (5) for a vehicle (200) according to any one of claims 17 to 21, wherein the first flow channel plate (5A) and the second flow channel plate (5B) are fixedly connected.

23. A thermal management system (100) for a vehicle (200), comprising an integrated module (5) according to any one of claims 1 to 22.

24. A vehicle (200), comprising:
a body (103);
a power supply module (102), the power supply module (102) comprising a battery module (1021), a first heat exchange plate (3) and a second heat exchange plate (4), the first heat exchange plate (3) and the second heat exchange plate (4) being arranged on the battery module (1021) to exchange heat with the battery module (1021), the power supply module (102) being arranged on the body (103).
an integrated module (5), the integrated module (5) being an integrated module (5) according to any one of claims 1 to 22, the first flow channel plate (5A) being fixed to the body (103), the first cold plate interface (51d) and the second cold plate interface (51e) being used to connect to the first heat exchange plate (3), the third cold plate interface (51f) and the fourth cold plate interface (51g) being used to connect to the second heat exchange plate (4).
